# EUROPEAN PATENT SPECIFICATION

(11) **EP 4 000 900 B1**
(45) Date of publication and mention of the grant of the patent: **31.12.2025**
(21) Application number: 21207372.0
(22) Date of filing: 10.11.2021
(51) Int. Cl.: B29C 70/54, B29C 37/02, B29C 70/86

(54) **METHOD AND APPARATUS FOR INSTALLING INDEXING FEATURES INTO A COMPOSITE PART**
VERFAHREN UND VORRICHTUNG ZUM ANBRINGEN VON INDEXIERMERKMALE IN EIN VERBUNDBAUTEIL
PROCÉDÉ ET DISPOSITIF D'INSTALLATION DE CARACTERISTIQUES D'INDEXATION DANS UNE PIÈCE COMPOSITE

(30) Priority: 18.11.2020 US 202063115052 P; 26.01.2021 NL 2027393
(43) Date of publication of application: 25.05.2022
(73) Proprietor: The Boeing Company, Arlington, VA 22202 (US)
(72) Inventor: Smith, Daniel R., Chicago, 60606-1596 (US); Jones, Darrell D., Chicago, 60606-1596 (US); Swanstrom, Frederick M., Chicago, 60606-1596 (US); Wright, Monte D., Chicago, 60606-1596 (US)
(74) Representative: Arnold & Siedsma

(56) References cited:
- EP-A1- 3 034 284
- US-A- 4 565 595
- US-A1- 2004 217 497
- US-A1- 2011 233 819

## Description

The disclosure relates to the field of aircraft, and in particular, to fabrication and assembly of aircraft wings.

An airframe defines the mechanical structure of an aircraft. Airframes are made of multiple components that provide desired structural properties. For example, a portion of an airframe for a wing of an aircraft may include components that are mechanically coupled together (e.g., via co-bonding, co-curing, or fasteners) in accordance with design parameters. In particular, a wing assembly generally includes upper and lower wing panels, each of which include a wing skin stabilized by a series of stringers, that together sandwich a support structure consisting of forward and rear spars that extend along the span of the wing panels, and that are connected together by a series of parallel ribs that each extend chordwise across the wing panels. As presently practiced, components of an airframe are fabricated and assembled in predefined cells on a factory floor. For example, components may be laid-up, cured, or otherwise fabricated at one cell, and then may be transported in their entirety to a new cell where work is performed.

The abstract of EP 3034284 states: "Method for manufacturing of a CFRP part comprising the following steps: laying out one or more pre-preg or composite plies, on a mould comprising a marking tool, forming an uncured laminate with a guiding mark on the uncured laminate using; curing the laminate giving the part the final shape with the guiding mark and; trimming and/or drilling the CFRP part taking as reference the guiding mark. There are also provided a mould for moulding and curing a CFRP part comprising a marking tool adapted to perform a guiding mark on a fresh CFRP part, and a system for manufacturing of a moulded CFRP part."

The abstract of US 2004/217497 states: "A method and apparatus for use in manufacturing a composite part includes molding a composite part on a lay-up tool, machining a sacrificial portion of a first surface for securing a first hardware device with the composite part while the part is on the lay-up tool and cutting the part forming a peripheral edge while the part is on the lay-up tool. The method can further include positioning the first hardware device in contact with a machined interface of the composite part and machining the part including drilling a plurality of positioning holes through the hardware device and the part while the part is on the lay-up tool. The machining can include machining the sacrificial portion creating a machined interface and posi-tioning the hardware device on the machined interface."

While the fabrication processes discussed above are reliable, they encounter delays when work at a specific portion of a component is completed more slowly than expected. For example, if a particular portion of a wing takes longer than expected to be laid-up or fastened together, then the entire wing assembly remains at the cell until all of the work that has been delayed is completed. Furthermore, after a component has been moved, a great deal of time is spent cataloging the configuration of the component. This time is not value-added time. Furthermore, frequent moves between cells add a substantial amount of time that is not value-added. That is, each movement of a component between cells (and hence, each cell used in the fabrication process) requires setup time, and this setup time should be minimized to enhance efficiency. Current designs utilize automated optical inspection techniques and/or probes to inspect position of parts along six degrees of freedom across their dimensions, but these are particularly time-consuming and expensive processes.

Therefore, it would be desirable to have a method and apparatus that take into account at least some of the issues discussed above, as well as other possible issues.

Embodiments described herein provide for enhanced systems and techniques that facilitate fabrication and assembly of aircraft wings via an assembly line. According to these embodiments, large components such as wing panels are transported in pulses or moved continuously. Discrete work stations disposed along the assembly line perform various work tasks on the component (e.g., during pauses between pulses or while the component is moved continuously). As discussed in greater detail below, the embodiments herein focus on assembling a wing assembly by following the progress of a wing panel, to which other components (for example, ribs, and spars, and then another wing panel) are gradually installed, through an assembly line. According to the disclosure, indexing features, for indexing the component (e.g., a wing panel) to one or more of the work stations, are formed into the component. In embodiments in which the component is a wing panel, indexing features are formed into a manufacturing excess region of the wing panel that will eventually be trimmed off, as part of the forming of the wing panel. The wing panel may be indexed to a work station by means of these indexing features. In some embodiments, work stations are disposed in close enough proximity to each other such that a wing panel, due to its size, may encounter multiple work stations simultaneously. For example, an assembly line may include a sequence of stations arranged in a process direction so that a forward portion of the wing panel first encounters an inspection station (such as a non-destructive inspection, or NDI, station), then a cut-out station, and then a rib install station, as it is moved in the process direction. These stations may be disposed closely enough to each other so that when, for example, a forward portion encounters the rib install station, a middle portion of the wing panel encounters the cut-out station, and a rearward portion encounters the NDI station, such that two or more of the stations, or all three, may perform work tasks on the portion of the same wing panel that is within the purview of the respective station, such as at the same time or overlapping in time. This assembly technique provides a technical benefit by integrating transportation processes into assembly processes, and by reducing the amount of work to be performed on a large component each time the component is moved.

As described more fully below, the disclosure relates to a method for installing indexing features into a composite part, in which the methods include the steps according to claim 1 Some methods further include, prior to hardening the preform, conforming the preform to surface features on the layup mandrel that are located beyond the final trim boundaries of the composite part and that complementarily form the indexing features into the preform. The method according to the disclosure of claim 1 further includes, prior to demolding the part, removing material from the composite part while retaining the manufacturing excess that includes the indexing features. Some methods further include indexing the composite part to a work station in an assembly line via one or more of the indexing features, and performing work on the composite part at the work station while the composite part is indexed to the work station. Some methods further include installing readable identifying means to the manufacturing excess.

It is noted that the term 'mandrel' as used in the application refers to a mandrel upon which parts, for example aircraft parts, can be positioned. The term mandrel may interchangeably used with the term 'layup mandrel'. The mandrel is provided with and/or used as a surface upon which parts, layers of material or combinations thereof may be positioned. This may for example be a lay-up mandrel or mandrel upon which wing panels and/or wing skins are transported.

Some embodiments are non-transitory computer readable media embodying instructions which, when executed by a processor, are operable for performing the methods briefly mentioned above.

Some embodiments take the form of apparatus for installing indexing features into a composite part, in which the apparatus includes a layup mandrel that further includes a layup region for laying up a preform for a composite part having a final perimeter, a manufacturing excess region disposed beyond the final perimeter and at least partially encompassing the layup region, and surface features disposed within the manufacturing excess region configured to complementarily form indexing features onto a preform laid-up onto the layup mandrel. The layup region in some apparatus defines a contour for the composite part. The layup mandrel includes a guide configured to direct a cutter to remove material from a composite part hardened from the preform.

The disclosure also relates to a system for installing indexing features into a composite part, in which the systems include a layup mandrel that further includes a layup region that defines a contour for a composite part, a manufacturing excess region at least partially encompassing the layup region, surface features disposed within the manufacturing excess region configured to complementarily form indexing features onto a preform laid-up onto the layup mandrel. The systems also include a cutter configured to trim excess material beyond the manufacturing excess region from a composite part formed from the preform. The system according to the disclosure of claim 7 further includes a guide defining a path around the manufacturing excess region, wherein the cutter is configured to follow the guide when trimming excess material. Some systems further include a controller configured to control the operation of the cutter.

The disclosure also relates to a preform for use in the system according to the disclosue, the preform being for forming a composite wing panel having a final perimeter, in which the preform includes: a portion disposed within the final perimeter, said portion having a contour formed thereto; a manufacturing excess disposed beyond the final perimeter; and at least one indexing feature formed into the manufacturing excess. Some preforms include multiple plies of unidirectional fiber reinforced material.

The disclosure also relates to composite parts for forming into a wing panel having a final perimeter, in which the composite parts include: a portion disposed within the final perimeter, said portion having a contour formed thereto; a manufacturing excess disposed beyond the final perimeter; and at least one indexing feature (210) formed into the manufacturing excess.

Some embodiments are non-transitory computer readable media embodying instructions which, when executed by a processor, are operable for performing the method according to the claims.

According to an aspect of the present disclosure, a method for installing indexing features into a composite part is disclosed, the method comprising the steps outlined in claim 1

Advantageously, the method further comprises, prior to hardening the preform, conforming the preform to surface features on the layup mandrel that are located beyond the final trim boundaries of the composite part and that complementarily form the indexing features into the preform.

Preferably, the method is one wherein the indexing features are disposed at the surface features on the layup mandrel.

Preferably, the method further comprises prior to demolding the part, removing material from the composite part while retaining the manufacturing excess that includes the indexing features.

Preferably, the method is one wherein removing material from the composite part comprises trimming off a flash edge of the composite part, to form a manufacturing excess edge.

Preferably, the method further comprises forming additional indexing features into the composite part.

Preferably, the method further comprises indexing the composite part to a work station (520) in an assembly line via one or more of the indexing features; and performing work on the composite part at the work station while the composite part is indexed to the work station.

Preferably, the method further comprises trimming the manufacturing excess from the composite part to the final trim boundaries, thereby removing the indexing features; and integrating the composite part into a wing of an aircraft.

Preferably, the method is one wherein the indexing features are selected from the group consisting of indents, protrusions, ridges, grooves, notches, through-holes, blind holes, dams, and readable identifying means.

Preferably, the method is one wherein the readable identifying means are selected from the group consisting of an RFID chip and a bar code.

Preferably, the method is one wherein removing material from the composite part comprises trimming the composite part with a cutter having a blade.

Preferably, the method is one wherein removing material from the composite part comprises installing additional indexing features.

Preferably, the method is one wherein the additional indexing features are selected from the group consisting of holes, notches, channels, and grooves.

Preferably, the method further comprises installing additional indexing features into the composite part.

Preferably, the method is one wherein the additional indexing features are selected from the group consisting of: indents, protrusions, ridges, grooves, notches, through-holes, blind holes, dams, pins, rings and readable identifying means.

Preferably, the method is one wherein the readable identifying means are selected from the group consisting of an RFID chip and a bar code

Preferably, the method is one wherein the layup mandrel includes recesses in the contour and wherein the method further comprises filling the recesses with potting compound.

Preferably, the method is one wherein filling the recesses restores the contour of the layup mandrel.

Preferably, the method is one wherein filling the recesses with potting compound is performed prior to laying up the preform.

Preferably, the method is one wherein filling the recesses with potting compound is performed after demolding the composite part.

Preferably, the method is one wherein surface features at the layup mandrel are each separated from neighboring surface features by a distance to create evenly spaced indexing features at the composite part.

Preferably, the method is one wherein further comprises installing readable identifying means to the manufacturing excess.

Preferably, the method is one wherein the readable identifying means is selected from the group consisting of an RFID chip and a bar code.

Preferably, the method is one wherein the readable identifying means is installed to the manufacturing excess of the composite part.

Preferably, the method is one wherein laying up is performed while the layup mandrel is moved through an assembly line.

Preferably, the method further comprises indexing the composite part to a shuttle configured to advance the composite part through an assembly line via one or more of the indexing features and advancing the composite part while the composite part is indexed to the shuttle.

The present disclosure also relates to a portion of an aircraft assembled according to the method described above.

According to an aspect of the present disclosure a non-transitory computer readable medium embodying programmed instructions which, when executed by a processor, are operable for performing a method for installing indexing features into a composite part according to the claims.

Advantageously, the medium further comprises prior to hardening the preform, conforming the preform to surface features on the layup mandrel that are located beyond the final trim boundaries of the composite part and that complementarily form the indexing features into the preform.

Preferably, the medium is one wherein the indexing features are disposed at the surface features on the layup mandrel.

Preferably, the medium further comprises prior to demolding the part, removing material from the composite part while retaining the manufacturing excess that includes the indexing features.

Preferably, the medium is one wherein removing material from the composite part comprises trimming off a flash edge of the composite part, to form a manufacturing excess edge.

Preferably, the medium is one wherein the method further comprises forming additional indexing features into the composite part.

Preferably, the medium is one wherein the method further comprises indexing the composite part to a station in an assembly line via one or more of the indexing features; and performing work on the composite part at the station while the composite part is indexed to the station.

Preferably, the medium is one wherein the method further comprises trimming the manufacturing excess from the composite part to the final trim boundaries, thereby removing the indexing features and integrating the composite part into a wing of an aircraft.

Preferably, the medium is one wherein the indexing features are selected from the group consisting of indents, protrusions, ridges, grooves, notches, through-holes, blind holes, dams, and readable identifying means.

Preferably, the medium is one wherein the readable identifying means are selected from the group consisting of an RFID chip and a bar code.

Preferably, the medium is one wherein removing material from the composite part comprises trimming the composite part with a cutter having a blade.

Preferably, the medium is one wherein removing material from the composite part comprises installing additional indexing features.

Preferably, the medium is one wherein the additional indexing features are selected from the group consisting of holes, notches, channels, and grooves.

Preferably, the medium is one wherein the method further comprises installing additional indexing features into the composite part.

Preferably, the medium is one wherein the additional indexing features are selected from the group consisting of: indents, protrusions, ridges, grooves, notches, through-holes, blind holes, dams, pins, rings and readable identifying means.

Preferably, the medium is one wherein the readable identifying means are selected from the group consisting of an RFID chip and a bar code

Preferably, the medium is one wherein the layup mandrel includes recesses in the contour and wherein the method further comprises filling the recesses with potting compound.

Preferably, the medium is one wherein filling the recesses restores the contour of the layup mandrel.

Preferably, the medium is one wherein filling the recesses with potting compound is performed prior to laying up the preform.

Preferably, the medium is one wherein filling the recesses with potting compound is performed after demolding the composite part.

Preferably, the medium is one wherein surface features at the layup mandrel are each separated from neighboring surface features by a predefined distance to create evenly spaced indexing features at the composite part.

Preferably, the medium is one wherein the method further comprises installing readable identifying means to the manufacturing excess.

Preferably, the medium is one wherein the readable identifying means is selected from the group consisting of an RFID chip and a bar code.

Preferably, the medium is one wherein the readable identifying means is installed to the manufacturing excess of the composite part.

Preferably, the medium is one wherein laying up is performed while the layup mandrel is moved through an assembly line.

Preferably, the medium is one wherein the method further comprises indexing the composite part to a shuttle configured to advance the composite part through an assembly line via one or more of the indexing features and advancing the composite part while the composite part is indexed to the shuttle.

The present disclosure also relates to a portion of an aircraft assembled according to the method defined by the instructions stored on the computer readable medium described above.

According to an aspect of the present disclosure an apparatus for installing indexing features into a composite part is disclosed, the apparatus comprises:
- a layup mandrel comprises:
   - a layup region for laying up a preform for a composite part having a final perimeter;
   - a manufacturing excess region disposed beyond the final perimeter and at least partially encompassing the layup region; and
   - surface features disposed within the manufacturing excess region configured to complementarily form indexing features onto a preform laid-up onto the layup mandrel.

Advantageously, the apparatus is one wherein the layup region defines a contour for the composite part.

Preferably, the apparatus is one wherein the layup mandrel further comprises a potted area within the layup region, wherein the potted area is configured to accommodate overshoot from machining a composite part hardened from the preform.

Preferably, the apparatus is one wherein the potted area is filled with potting compound.

Preferably, the apparatus is one wherein the contour is a contour for a wing panel of an aircraft.

Preferably, the apparatus is one wherein the layup mandrel further comprises a guide configured to direct a cutter to remove material from a composite part hardened from the preform.

Preferably, the apparatus is one wherein the layup mandrel further comprises a potted area configured to accommodate overshoot from machining a composite part hardened from the preform.

Preferably, the apparatus is one wherein the potted area is filled with potting compound.

Preferably, the apparatus is one wherein the surface features are selected from the group consisting of indents, protrusions, ridges, grooves, notches, through-holes, blind holes, and dams.

Preferably, the apparatus is one wherein positions of the surface features in the layup mandrel are toleranced to within about 0.00254 cm (one thousandth of an inch).

Preferably, the apparatus is one wherein the surface features in the layup mandrel are each separated from each other by a predefined distance.

The present disclosure also relates to fabricating a portion of an aircraft using the apparatus described above.

According to an aspect of the present disclosure a system for installing indexing features into a composite part according to claim 7 is defined. It comprises
- a layup mandrel comprising:
   - a layup region that defines a contour for a composite part;
   - a manufacturing excess region at least partially encompassing the layup region;
   - surface features disposed within the manufacturing excess region configured to complementarily form indexing features onto a preform laid-up onto the layup mandrel; and
   - a cutter configured to trim excess material beyond the manufacturing excess region from a composite part formed from the preform.

According to claim 7, the system further comprising a guide defining a path around the manufacturing excess region wherein the cutter is configured to follow the guide when trimming excess material.

Preferably the system is one wherein the cutter further comprises a blade.

Preferably the system is one wherein the blade is selected from the group consisting of a circular blade and a reciprocating blade.

Preferably the system further comprising a controller configured to control the operation of the cutter.

According to an aspect of the present disclosure a preform for a composite wing panel having a final perimeter according to claim 13 is provided

Advantageously, the preform is one wherein the preform comprises multiple plies of unidirectional fiber reinforced material.

Other illustrative embodiments (e.g., methods, computer-readable media, systems, and so forth, relating to the foregoing embodiments) may be described below. The features, functions, and advantages that have been discussed can be achieved independently in various embodiments or may be combined in yet other embodiments further details of which can be seen with reference to the following description and drawings.

Some embodiments of the present disclosure are now described, by way of example only, and with reference to the accompanying drawings. The same reference number represents the same element or the same type of element on all drawings.
FIG. 1 is a block diagram of a layup system that applies indexing features to a manufacturing excess of a preform that will be hardened into a composite part in an illustrative embodiment.
FIG. 2A illustrates a layup mandrel awaiting layup in an illustrative embodiment.
FIG. 2B illustrates a layup mandrel covered by a composite part in an illustrative embodiment.
FIG. 3 is a flowchart illustrating a method for applying indexing features to a manufacturing excess of a preform that will be hardened into a composite part in an illustrative embodiment.
FIG. 19 is a perspective view of an aircraft that includes a fully assembled wing in an illustrative embodiment.
FIG. 20 is a block diagram of various components and systems discussed herein in an illustrative embodiment.

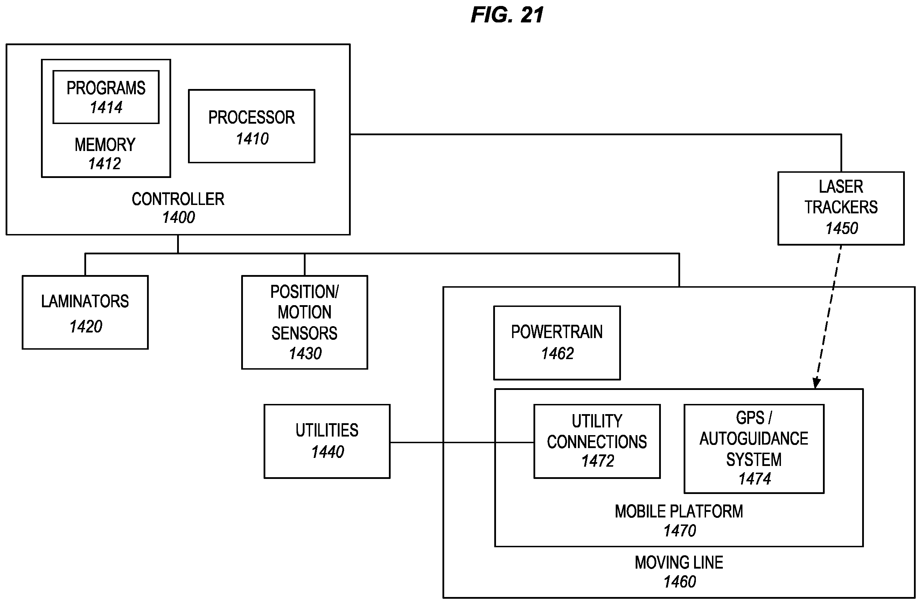

FIG. 21 broadly illustrates control components of a production system that performs ultrasonic inspection in an illustrative embodiment.
FIG. 22 depicts an assembly line in an illustrative embodiment.
FIG. 23 is a flow diagram of aircraft production and service methodology in an illustrative embodiment.
FIG. 24 is a block diagram of an aircraft in an illustrative embodiment.

The figures and the following description provide specific illustrative embodiments of the disclosure. It will thus be appreciated that those skilled in the art will be able to devise various arrangements that, although not explicitly described or shown herein, embody the principles of the disclosure and are included within the scope of the disclosure. Furthermore, any examples described herein are intended to aid in understanding the principles of the disclosure, and are to be construed as being without limitation to such specifically recited examples and conditions. As a result, the disclosure is not limited to the specific embodiments or examples described below, but by the claims.

For convenience, the description is presented as a sequence of operations that may occur in the production of a wing for an aircraft, as it is assembled on an assembly line from constituent parts. In particular, the description begins with the formation of a wing panel from a preform, and proceeds through various operations performed on the wing panel, including the addition of structural components such as ribs and spars to the wing panel (which may be an upper wing panel), and joining another wing panel (such as a lower wing panel) to form a wing assembly. The term "wing assembly" is used herein generally to refer to a wing panel to which one or more major structural components, e.g. ribs and spars, has been affixed or installed, and may thus include a complete wing. However, as the description refers mainly to the formation of a wing panel and the addition of major structural components thereto, and not necessarily to the inclusion of cabling and mechanical and electrical systems that are typically also incorporated into a completed wing. Not all operations, processes, steps, and other actions described herein necessarily take place in all of the embodiments (e.g., embodiments of wing assemblies, embodiments of structural components thereof, embodiments of methods relating to the assembly thereof, etc.) described herein, or in other embodiments that are consistent with this disclosure. Further, the operations described, or certain actions included therein, may take place in a different order than as discussed, may take place at the same time or overlapping in time with other actions, may represent alternative operations for different wing panels (such as an upper wing panel as opposed to a lower wing panel, etc.), and so forth.

The wings and wing assemblies described herein may comprise metal parts and/or composite parts. Composite parts, such as carbon fiber reinforced polymer (CFRP) parts, are initially laid-up in multiple layers that together are referred to as a preform. Individual fibers within each layer of the preform are aligned parallel with each other, but different layers exhibit different fiber orientations in order to increase the strength of the resulting composite part along different dimensions. The preform includes a viscous resin that solidifies in order to harden the preform into a composite part (e.g., for use in an aircraft). Carbon fiber that has been impregnated with an uncured thermoset resin or a thermoplastic resin is referred to as "prepreg." Other types of carbon fiber include "dry fiber" which has not been impregnated with thermoset resin but may include a tackifier or binder. Dry fiber is infused with resin prior to curing. For thermoset resins, the hardening is a one-way process referred to as curing, while for thermoplastic resins, the resin reaches a viscous form if it is re-heated.

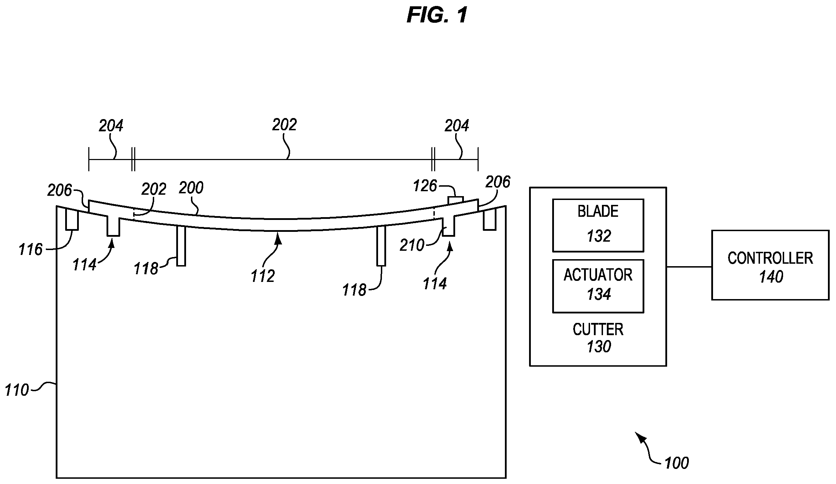

FIG. 1 is a schematic diagram of an illustrative layup system 100 that applies indexing features to a manufacturing excess of a preform that will be hardened into a composite part in an illustrative embodiment. In prior systems, manufacturing excess for a composite part - that is, material that is beyond the intended final dimensions or boundaries (e.g., the final perimeter) of the composite part - is trimmed immediately after demolding. For example, this may include placing a wing panel into a dedicated cell, scanning the wing panel to characterize it, and then trimming the wing panel (e.g., with a cutter) along the perimeter of the part until final perimeter dimensions are accomplished. Similar processes are applied when trimming manufacturing excess for a fuselage. As will be described in greater detail herein, layup system 100 is unique in that it utilizes material that is traditionally immediately trimmed from a composite part after demolding. In particular, various indexing features are formed into the manufacturing excess of the preform, which can then be used to index (e.g. position, orient, identify, etc.) the hardened composite part for further operations, such as at one or more stations in an assembly line or other manufacturing process. Layup system 100 comprises any system, device, or component operable to apply indexing features to a preform which will be hardened into a composite part. In this embodiment, layup system 100 includes a layup mandrel 110 (e.g., a rigid metal mandrel) that defines a contour 112 (e.g., a curved, flat, or otherwise shaped contour) for a preform that will be hardened into a composite part, such as a wing panel. A preform 200 is shown to be disposed on the layup mandrel.

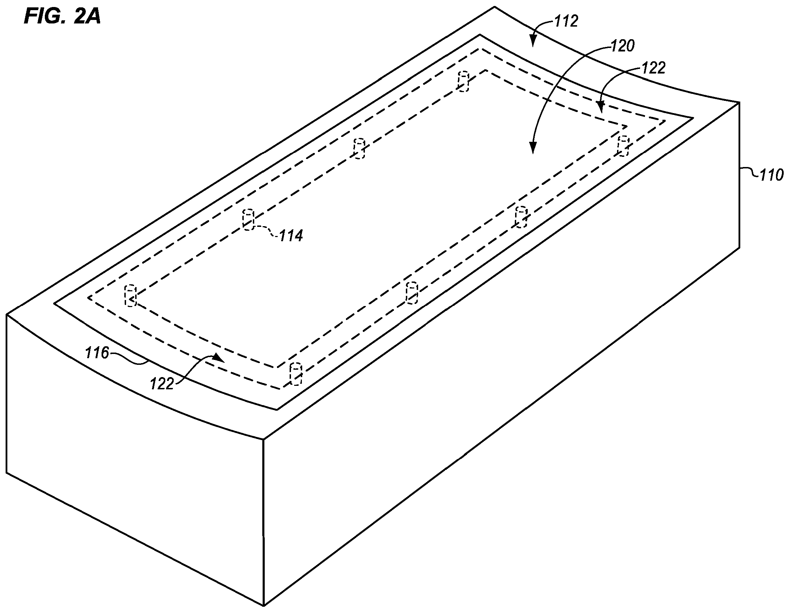

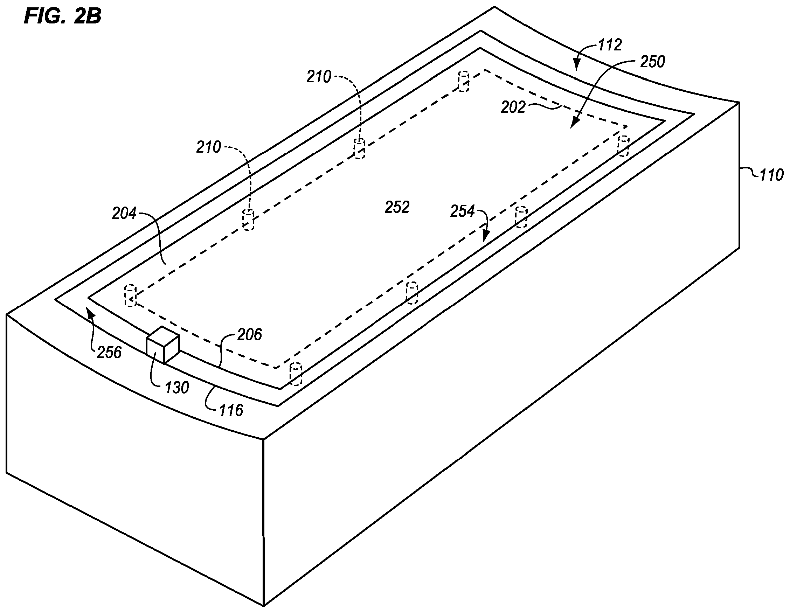

As can also be seen with reference to FIG. 2A and 2B, which show an isometric view of a simplified version of layup mandrel 110, the mandrel has surface features 114, such as indents, protrusions, ridges, grooves, notches, through-holes, blind holes, dams, etc. Like contour 112, which imparts a corresponding contour to the preform, surface features 114 are capable of being used to directly place corresponding indexing features, shown at 210, onto the preform. Others accommodate trimming of manufacturing excess at the layup mandrel 110, or drilling of a composite part hardened at the layup mandrel 110. In other words, the surface features 114 alter the shape of the preform 200 on a localized basis to place the indexing features 210 into the preform and/or hardened composite part, with the various types of surface features 114 offering different ways of forming the indexing features into the composite part. One way is in laying up the preform over a surface feature (e.g., a protrusion, which forms a corresponding indent in the preform that becomes part of the composite part after hardening); another way is by machining (e.g., by drilling) an indexing feature (e.g., a through-hole) into the composite part post-hardening. For example, in FIG. 1, surface features 114 are shown to include recesses 118 that are filled with potting compound and finished to a surface contour to complement the contour 112, so that indexing features such as through-holes may be drilled into the composite part hardened from the preform 200 prior to de-molding the part from the mandrel 110, with overshoot during the drilling operation removing some of the potting compound rather than damaging the surface of the layup mandrel. The surface features 114 are used to shape, or enforce, indexing features onto (and/or into) a preform 200 laid-up onto the layup mandrel 110.

Overshoot during machining, such as drilling or trimming, at the layup mandrel 110 after hardening necessitates rework of the potted surface(s) prior to the next use of the layup mandrel 110. The preform 200 is laid-up onto the layup mandrel 110 over the contour 112 and surface features 114.

As shown in FIG. 1 and as is also visible in FIG. 2A, which shows layup mandrel 110 awaiting a layup, the layup mandrel includes a layup region 120 for preform 200, which includes contour 112, and which is surrounded by a manufacturing excess region 122, within which are disposed surface features 114. Correspondingly, preform 200 is shown in FIG. 1 to extend past a final trim boundary or final perimeter 202 for the resulting composite part. The region of the preform that extends beyond the final perimeter 202 is the manufacturing excess, indicated at 204, which is defined by a manufacturing excess edge 206. Accordingly, surface features 114 are positioned to complementarily form indexing features 210 in preform 200. More particularly, the surface features 114 that are disposed in the manufacturing excess region 122 form indexing features 210 in the manufacturing excess 204 of preform 200 before hardening which, as noted above, may be utilized for indexing after the preform 200 has hardened into composite part 250. Although the curve of contour 112, which is shown as a shallow, concave surface, is shown to extend on layup mandrel 110 beyond the final perimeter 202 of the resulting composite part, this is not required to all embodiments, as the contour 112 is only required for the portion of the resulting composite part that is within the final perimeter 202. Also, while a concave layup mandrel 110 is illustrated, layup mandrels of any suitable shape may be utilized. For example, convex layup mandrels, and layup mandrels that define complex curvatures, are also possible. Also, while an outer mold line layup mandrel 110 is illustrated, inner mold line layup mandrels may be utilized in another embodiment.

While FIG. 2A shows layup mandrel 110 awaiting a layup, FIG. 2B shows a composite part, indicated at 250, which has been hardened from a preform 200, awaiting demolding from layup mandrel 110. Indexing features 210 of preform 200 have become indexing features 210 of composite part 250.

In some embodiments, the surface features 114 are separated from neighboring surface features by a predefined distance (e.g., several centimeters, meters (inches, several feet, etc.)), such as to create evenly spaced indexing features 210 at/on/in the preform 200 and resulting composite part 250. In another embodiment, the surface features 114 are unevenly spaced from each other. The positions and/or predefined distance(s) between indexing features may depend, in part, on factors such as the arrangement of work stations on an assembly line.

Positions of the surface features 114 in the layup mandrel 110 are precisely toleranced (e.g., to about 0.00254 cm (a thousandth of an inch)), and hence the positions of corresponding indexing features 210 at the preform 200 are also consequently known to a precise tolerance, even after the preform 200 has been hardened into composite part 250 and demolded from layup mandrel 110. Thereafter, the indexing features 210 may be utilized by stations in an assembly line in order to orient and position the resulting composite part in a desired manner so that work may be performed upon the composite part. Furthermore, because the layup mandrel 110 is re-usable, there is no need for a separate process of applying indexing features to preforms. Performing this process at a layup mandrel that is within tolerance results in indexing features that are also within tolerance. Recesses 118, also referred to as potting areas, are filled with a potting compound and placed to accommodate machining overshoot from a machining operation such as drilling operation to install indexing features (e.g. through-holes) after hardening into composite part 250 has been completed, as noted above, and refilled and/or resurfaced as necessary after machining and de-molding in order to prepare for the next preform.

Some embodiments include installing readable identifying means (shown generally at 126 in FIG. 1) in the preform, such as a Radio Frequency Identifier (RFID) chip. In such embodiments, one or more RFID chips are coupled, attached, or embedded into the manufacturing excess 204 of a preform 200. Readable identifying means such as an RFID chip can facilitate the indexing process by reporting information that characterizes aspects of the resulting composite part to which it is coupled. For example, an RFID chip can provide instructions to a work station regarding the portion of the structure within the purview of the particular work station. One or multiple RFID chips can provide instructions to one work station or multiple work stations, and there is no need for a one to one relationship of one RFID chip to one work station. In another example, the RFID chips report a type of structure/wing, including right or left, or upper or lower, or even model number, to the work station.

Further, although not shown in the drawings, one or more other readable identifying means 126 may be provided to preform 200, or to the composite part 250 formed therefrom, as part of the forming process, in addition to or instead of an RFID chip. For example, a bar code or other indicia , which may be scanned or read by a suitable reader by one or more work stations in an assembly line, may be inscribed or applied to the preform or resulting composite part, prior to de-molding. For the sake of this disclosure, all references herein to a particular type of readable identifying means 126 (such as an RFID chip, or a bar code) (and depictions thereof, in the drawings) are intended to broadly encompass any such readable identifying means.

The layup system shown in FIG. 1 further includes a cutter 130 having a blade 132 (e.g., a reciprocating or circular blade) and an actuator 134 that drives the blade 132 to cut portions of a composite part that are proximate to guides 116, which are shown in the form of adjoining grooves that encompass the manufacturing excess region 122, in the layup mandrel 110. That is, the guide 116 seats the cutter 130 and/or defines a path for cutter 130. Moreover, as shown in FIG. 1, the guide 116 may be filled with potting compound to accommodate a blade of the cutter (and refilled after use, similar to recesses 118). As shown in FIG. 2B, for example, in which the grooves that collectively form guide 116 are shown for clarity as a rectangular perimeter, composite part 250 is shown to include a portion 252 that is within layup region 120, as well as a portion 254 in the manufacturing excess region 122 that is conformed to surface features 114. A flash edge 256 of surplus material is shown in FIG. 2B to extend beyond the manufacturing excess region 122. The cutting operation, which is performed prior to demolding of the composite part 250 from the layup mandrel 110, removes flash edge 256 to define a manufacturing excess edge 206, and leaves a sufficient amount of manufacturing excess 204 to include indexing features 210 for use by stations in an assembly line. The rough cut provides a consistent edge, i.e. manufacturing excess edge 206, to the part during the manufacturing process, prior to trimming the edge to a final perimeter, i.e. final perimeter 202. This is desirable in contrast to working upon a part without a fixed consistent perimeter with respect to a manufacturing excess. Operations of the cutter 130 are managed by controller 140. Controller 140 may be implemented, for example, as custom circuitry, as a hardware processor executing programmed instructions, or some combination thereof.

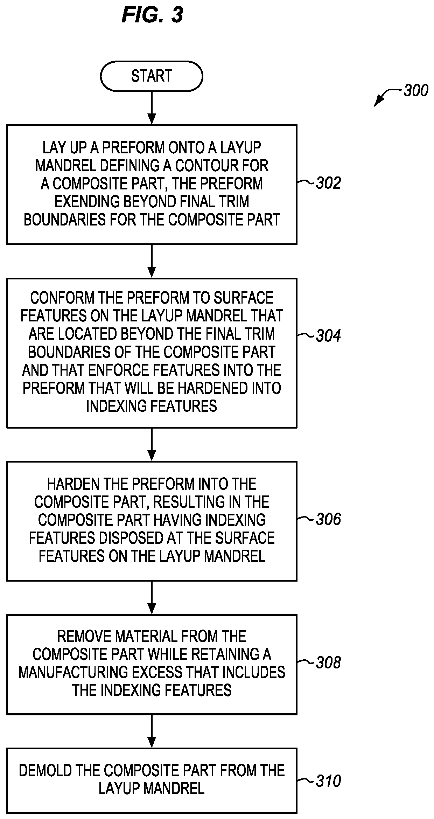

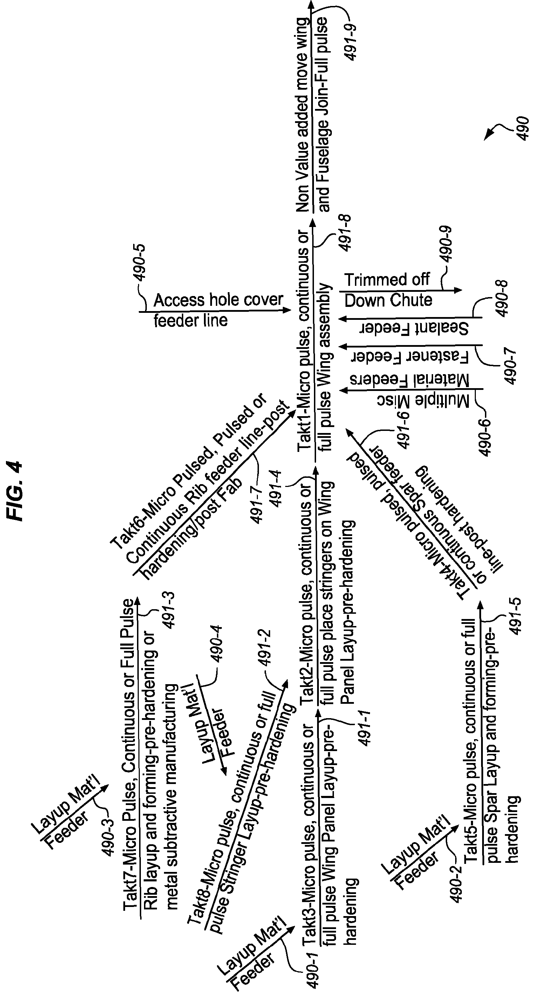

Illustrative details of the operation of layup system 100 will be discussed with regard to FIG. 3 and method 300 shown therein. Assume, for this embodiment, that layup mandrel 110 has been cleaned and returned to the start of an assembly line after a composite part has been demolded from the layup mandrel 110. Thus, layup mandrel 110 awaits layup of a preform, such as preform 200, for a next composite part 250.

FIG. 3 is a flowchart illustrating a method 300 for applying indexing features to a manufacturing excess 204 of a preform 200 that will be hardened into composite part 250 in an illustrative embodiment. The steps of method 300 are described with reference to components of layup system 100 shown in FIG. 1, 2A, and 2B, but those skilled in the art will appreciate that method 300 may be performed in other systems. As is the case with all of the methods illustrated and described in this disclosure, the steps shown in the flowchart described herein are neither all inclusive nor exclusive. Furthermore, the flowcharts herein (such as in FIG. 3) illustrate only a specific embodiment of a particular method (such as method 300), it will be understood that other embodiments of methods consistent with and encompassed by this disclosure include a fewer or greater number of steps than as shown, include steps performed in a different order than as shown in, and/or contain other (e.g., additional, fewer, and/or alternative) actions than as depicted. Further, as will become clear from the disclosure, as the various methods shown and discussed herein relate to several different operations and sequences that may be performed as a wing panel is formed and assembled into a wing assembly, methods in accordance with this disclosure may combine or otherwise include various steps and operations of two or more of various illustrated methods. Also, although reference numbers for components described above are used in the description of this method 300, it will be understood that the method (as well as other methods described herein) is applicable to components that may have different configurations than as illustrated and described above.

Focusing on method 300, in step 302, a preform 200 is laid-up onto the layup mandrel 110, such as onto a layup region 120, as well as onto a portion of the layup mandrel 110 that is located beyond final trim boundaries (i.e., the final perimeter 202) of the composite part 250, such as a manufacturing excess region 122. Manufacturing excess region 122 of the layup mandrel 110 includes surface features 114 configured to complementarily form indexing features 210 in the preform 200. The layup mandrel 110, in at least the layup region, defines a contour 112 for a composite part, and the preform 200 includes a manufacturing excess 204 that extends beyond the final perimeter for the composite part. Layup may be performed as the layup mandrel 110 itself is pulsed or moved continuously through an assembly line, and may include the synchronized operation of multiple lamination machines at once (e.g., during continuous motion of the layup mandrel, during pauses between movements of the layup mandrel, etc.). During layup, multiple plies of unidirectional fiber reinforced material are applied sequentially to build the preform 200 at a desired size and strength. The layup process extends the preform 200 beyond final trim (e.g. assembly-size) boundaries (e.g. beyond a final perimeter 202), which means that a portion of the preform 200 extends over surface features 114. In this embodiment, the preform 200 is a preform for a wing panel 550 with multiple layers/plies.

In step 304, the preform 200 is conformed to surface features 114 at the layup mandrel 110 that are located beyond the final trim boundaries of the composite part 250 and that complementarily form/enforce features into the preform 200 that will be hardened into indexing features 210. In one embodiment, this comprises consolidating the preform 200 by vacuum bagging the preform and applying consolidation pressure. In further embodiments, tows of fiber-reinforced material applied during layup in step 302 are compressed by a roller or other device to conform the preform 200 to the surface features 114.

In the illustrative method, steps 302 and 304 are usually performed in a clean room environment, to minimize the possibility of foreign object debris and other contaminants from contacting the preform 200, such as during layup. The layup mandrel 110 is then moved to an autoclave, which hardens the preform 200 into a composite part 250 via the application of heat and/or pressure. In step 306, the preform 200 is hardened into a composite part 250 that includes indexing features 210 complementarily formed therein, in that the indexing features 210 are complementary to the surface features 114, and are disposed at the surface features 114. During hardening, the preform 200 may be heated to a curing temperature for a thermoset resin within the preform 200, or the preform 200 may be heated to a melting temperature of a thermoplastic resin and then cooled until the thermoplastic resin solidifies. This results in the resulting composite part 250 having indexing features 210 disposed at the surface features 114 on the layup mandrel 110.

In further embodiments, additional indexing features 210 are added by milling or drilling the manufacturing excess, such as by installing holes, notches, channels, and/or grooves that remove material from the manufacturing excess. In still further embodiments, additional indexing features 210 such as pins, clips, rings, etc. are utilized and/or installed.

Some embodiments include installing readable identifying means 126 (such as an RFID chip, a bar code, and so forth) to the manufacturing excess 204, either of the preform 200 or of the composite part 250. Phrased another way, RFID chip and/or other readable identifying means 126 are placed in manufacturing excess 204 either prior or subsequent to hardening the preform into the composite part 250.

In step 308, material is removed (e.g., cut or otherwise separated) from the composite part 250 while retaining a manufacturing excess 204 that includes the indexing features 210. The cutting operation of step 308 creates a consistent perimeter/border of manufacturing excess 122. In one embodiment, this comprises operating a cutter 130 along guides 116 in order to cut away a resin flash (or flash edge 256) or other border of the composite part 250, resulting in a manufacturing excess edge 206. In one embodiment, trimming off flash edge 256 of the composite part is 250 performed prior to demolding the resulting composite part 250 from the layup mandrel 110. The composite part 250 retains manufacturing excess 204 having indexing features 210 that will be used for indexing the composite part as it is worked upon by work stations in an assembly line. The composite part 250 may also include indexing features 210 in areas that will be trimmed off to accommodate, for example, wing access doors or other portions of a wing panel, and/or manufacturing excess beyond a wing panel final perimeter. A final perimeter 202 can then be achieved by trimming off the remaining manufacturing excess later in the process. That is, one or more of the indexing features may be subject to removal to accommodate the addition of one or more components during assembly. For example, work stations can be designed to trim out manufacturing excess or portions thereof, install components such as ribs or spars, join components such as wing panels together, etc. In further embodiments, additional indexing features 210, such as holes, notches, channels, grooves, and so forth, are installed into/formed at the composite part 250 via drilling, milling, or other operations. In a further embodiment, removing material from the composite part 250 comprises installing such additional indexing features 210.

In step 310, after removing material, such as separating flash edge 256 and/or placing indexing one or more indexing features 210, from the composite part 250, the composite part is demolded from the layup mandrel 110. The composite part 250 then proceeds (not shown) to an assembly line for further fabrication and assembly, while the layup mandrel 110 returns for cleaning and receiving another preform for a composite part. In one embodiment, the layup mandrel 110 is also reworked (e.g., refilled with potting compound to restore layup contour 112 as needed after drilling or cutting overshoot into the potted areas 118 prior to demold , repaired, etc.) and transported to start a layup start location, such as on a wing panel layup line.

The method may then continue. For example, and as described in greater detail herein, the resulting composite part 250 may be indexed to a work station in an assembly line via the indexing features 210, and work may be performed on the composite part at the work station while the composite part is indexed to the work station. In some embodiments, the composite part 250 is suspended or otherwise conveyed through the assembly line by a shuttle, such as a strongback. The composite part 250 may be indexed to the shuttle, such as by means of a corresponding indexing unit on a strongback. The strongback may in turn index to a work station, in which case the composite part may be said to be indexed to the work station via the strongback. In any case, the indexing characterizes to a work station at least a portion of the composite part 250 (and/or the strongback) within the purview of the work station. In further embodiments, multiple indexing features interact with multiple work stations and/or with the strongback. The indexing may occur for one or more work stations, until eventually the manufacturing excess 204 is trimmed from the composite part 250 (e.g., after indexing features located in the manufacturing excess are no longer being used for assembly). After trimming, the composite part 250 has its final perimeter 202, and the indexing features 210 in the manufacturing excess have been removed. The composite part 250 is then integrated into a wing assembly of an aircraft.

Method 300 provides a substantial advantage over prior techniques, because it enables indexing features 210 to be installed into a composite part 250 during layup, by reference to surface features 114 on a mandrel 110 that has been precisely toleranced. This eliminates the need for the preform 200 to be precisely measured in order to install indexing features 210, because the indexing features are already placed at precisely known locations by virtue of the placement of the surface features and placement relative to the layup mandrel 110. The precision of the layup mandrel 110 and layup processes is therefore leveraged to avoid the need for downstream contour scanning and indexing. The precision of the layup mandrel 110 is therefore extended/leveraged beyond just layup processes to include post hardening processes such as trimming, milling or drilling to add indexing features prior to the demold of the composite part 250. Therefore the accuracy relationship of multiple surface features 114 and correspondingly formed indexing features 210 placed into the composite part 250 by using the layup mandrel 110 is carried along as the composite part advances, which may enable fabrication processing steps to occur simultaneously on the same part.

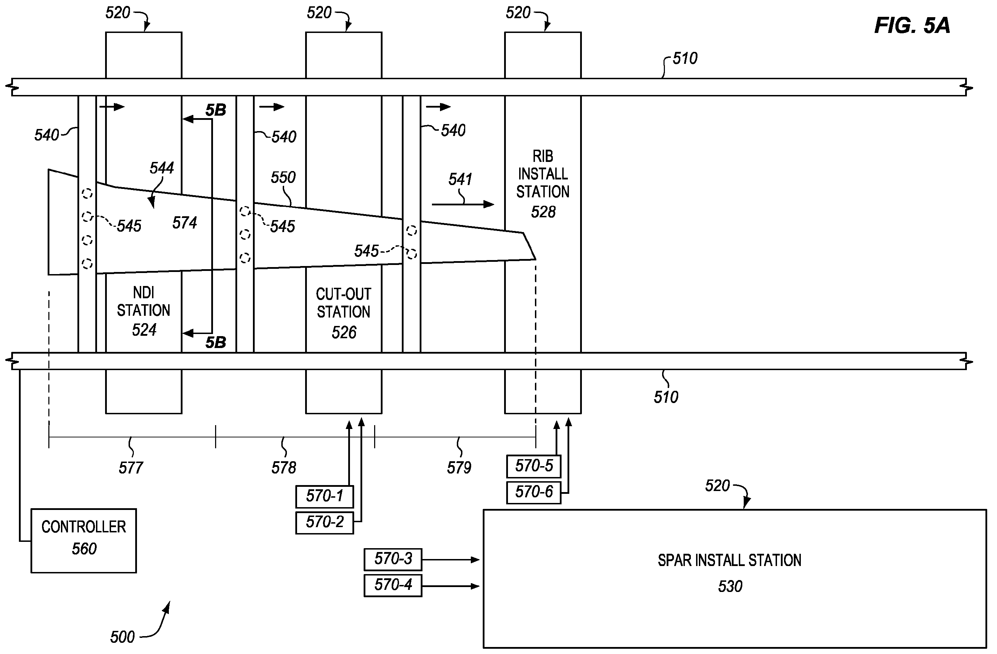

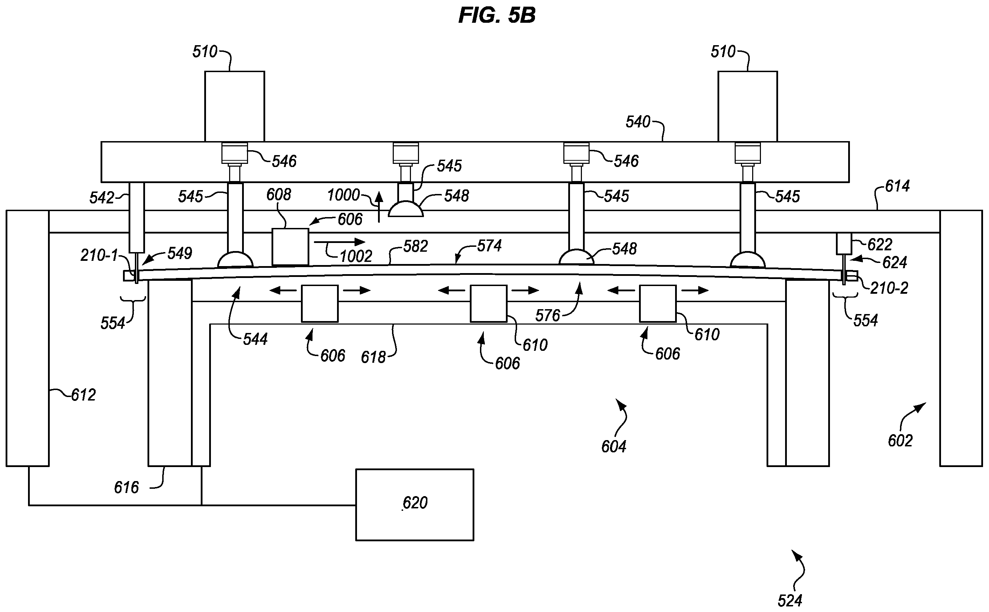

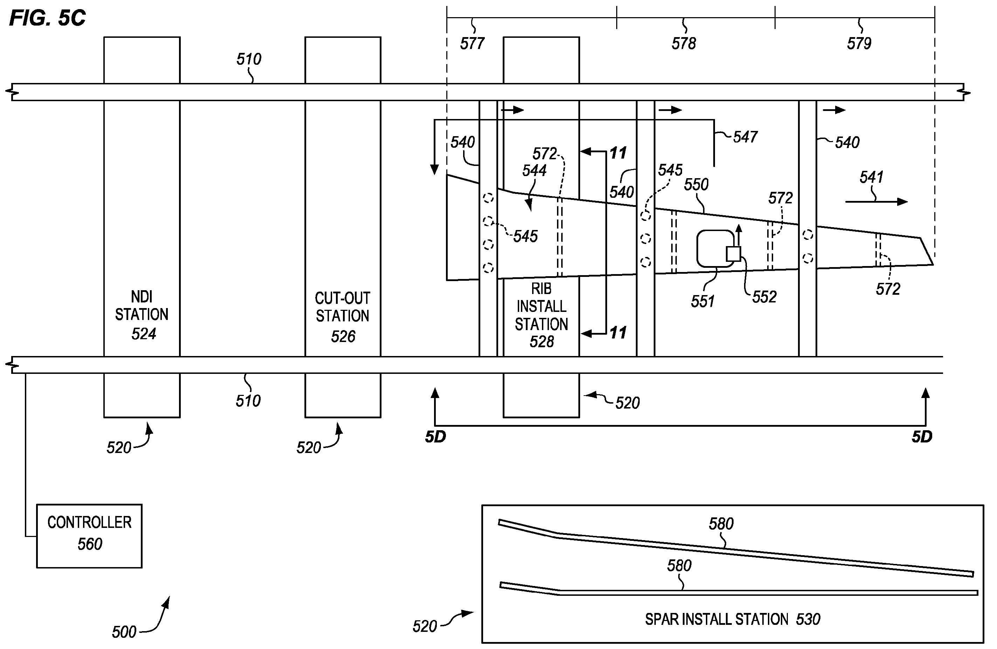

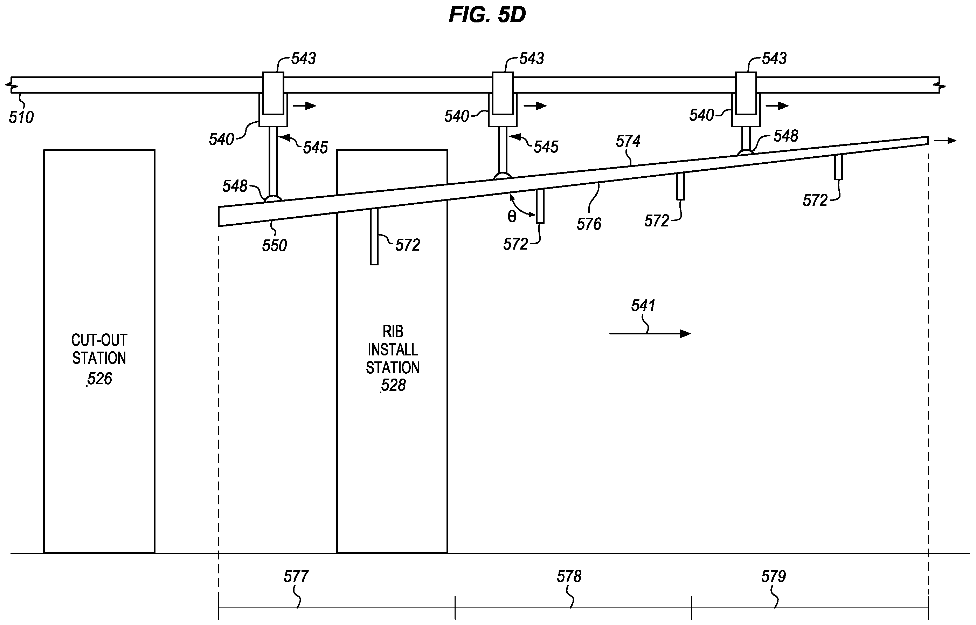

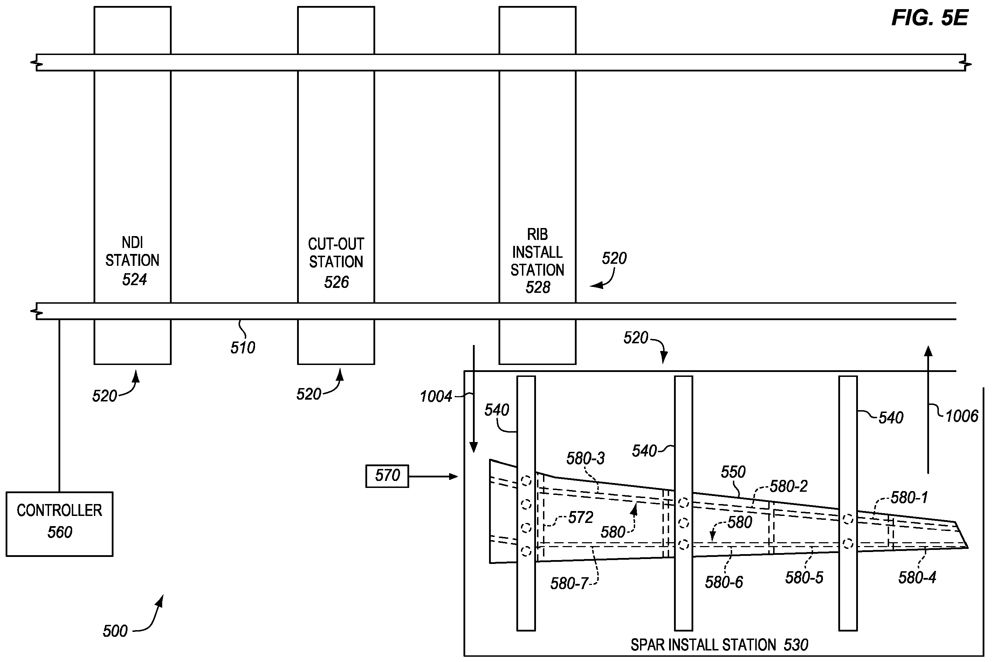

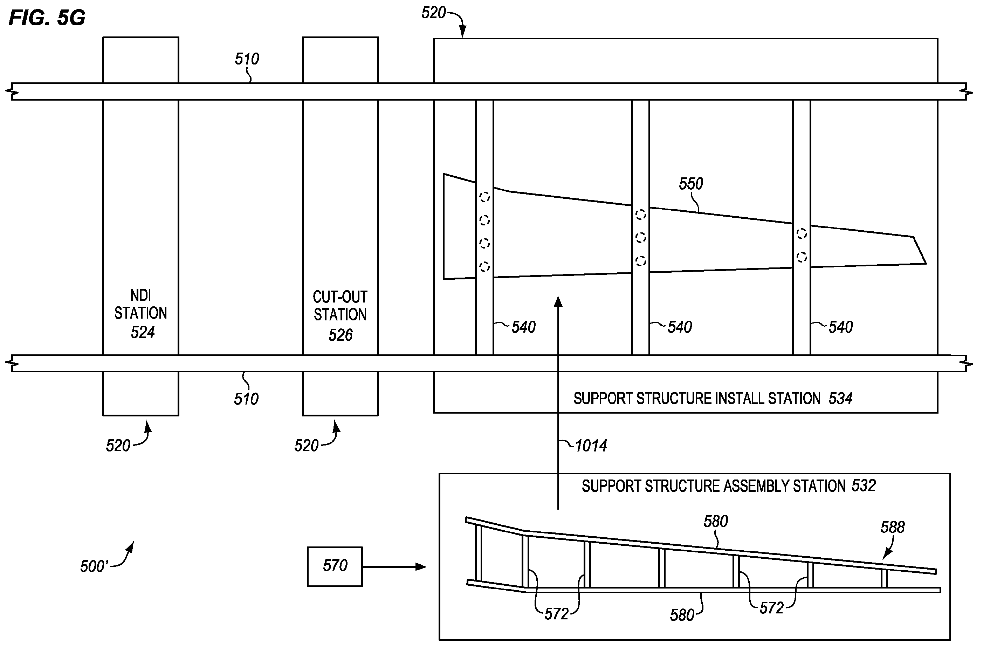

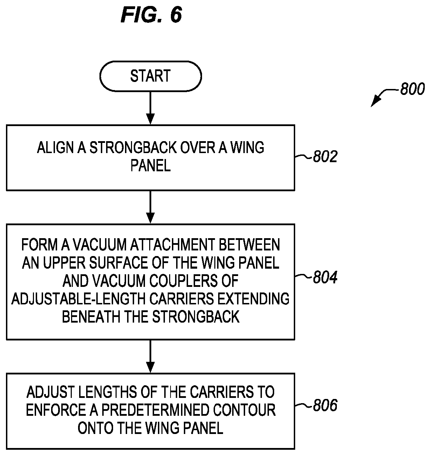

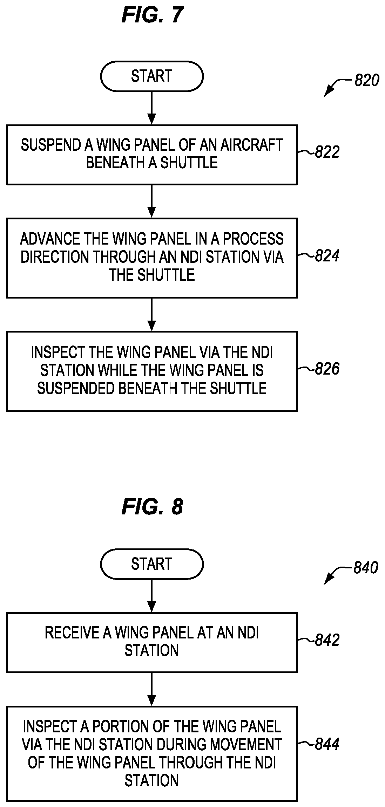

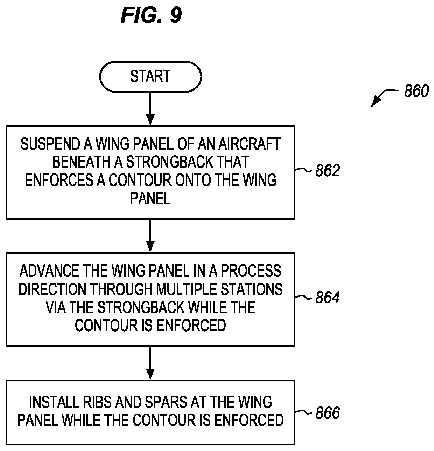

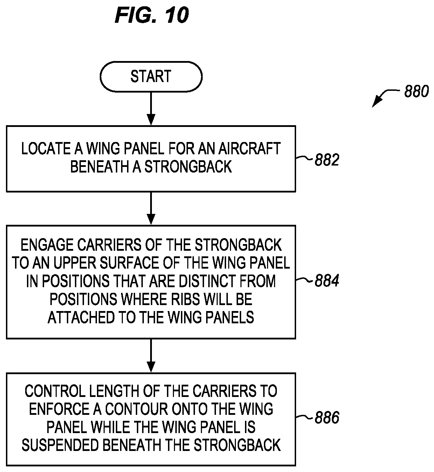

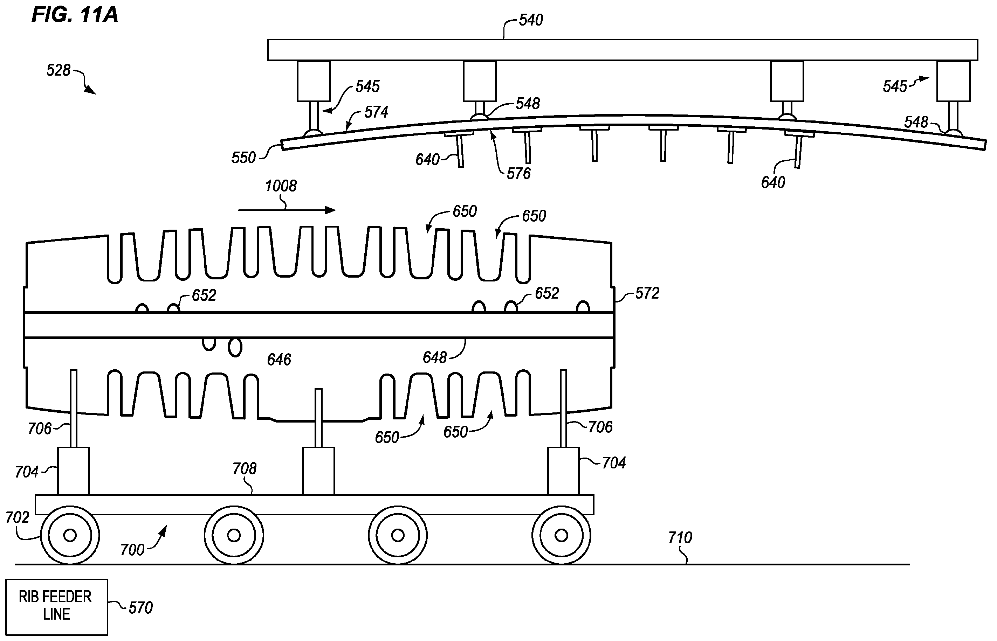

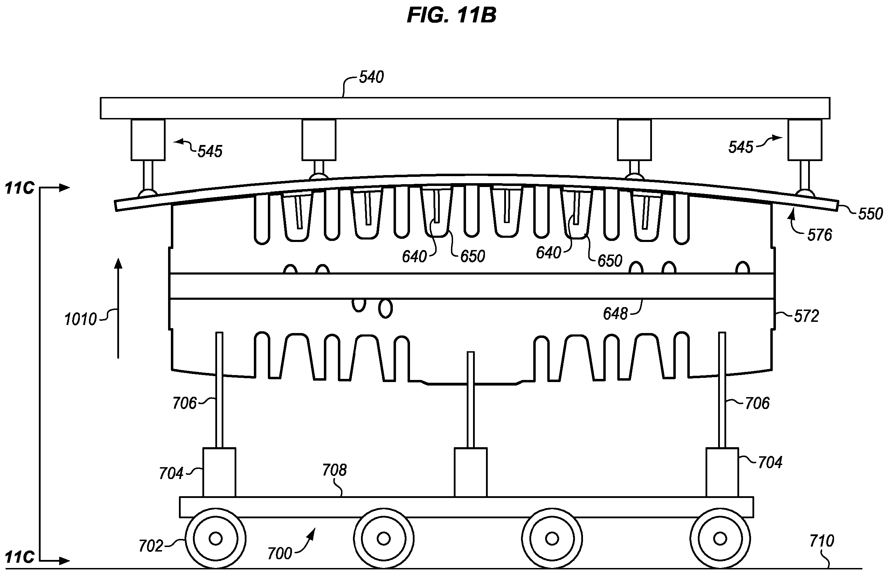

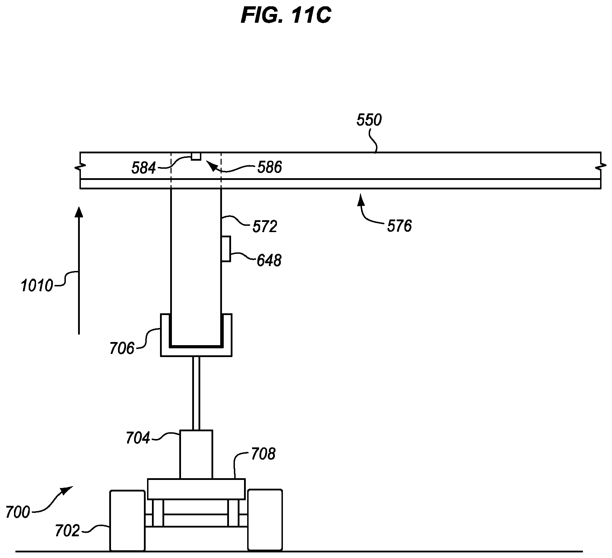

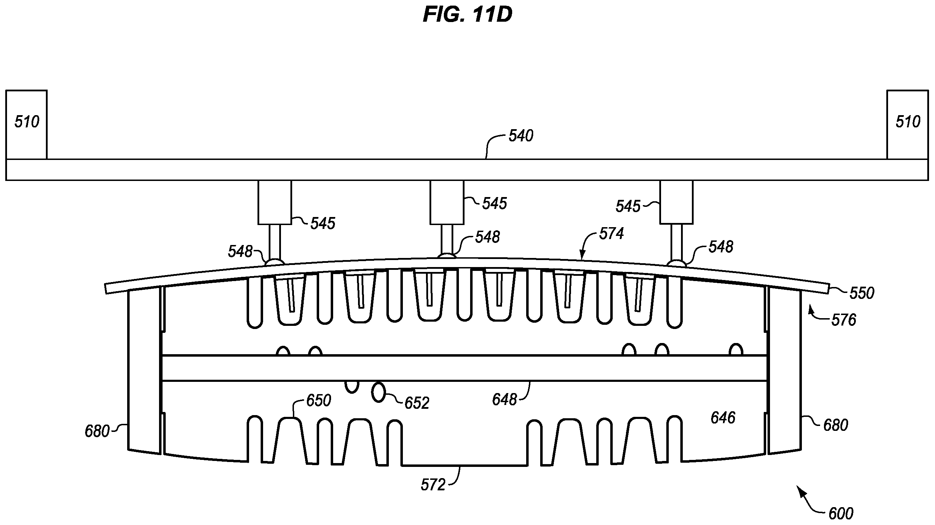

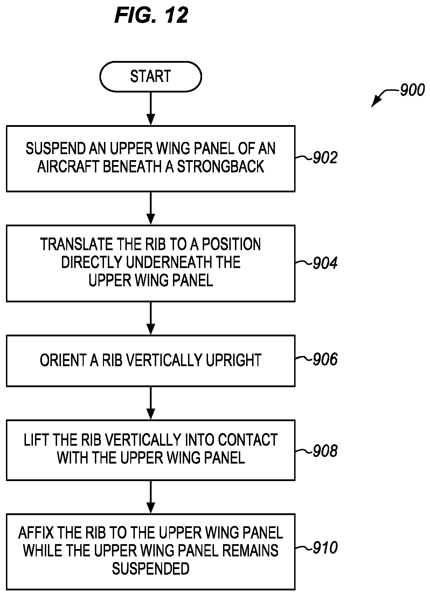

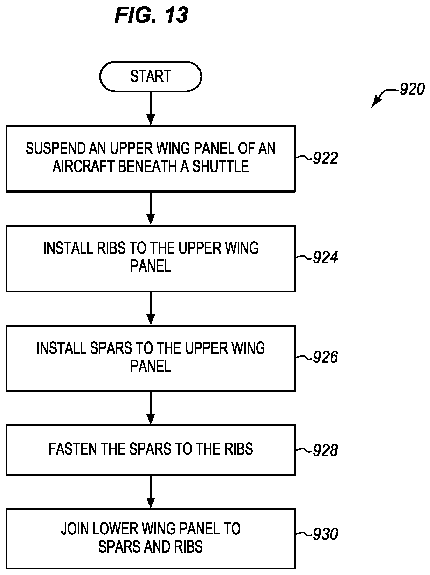

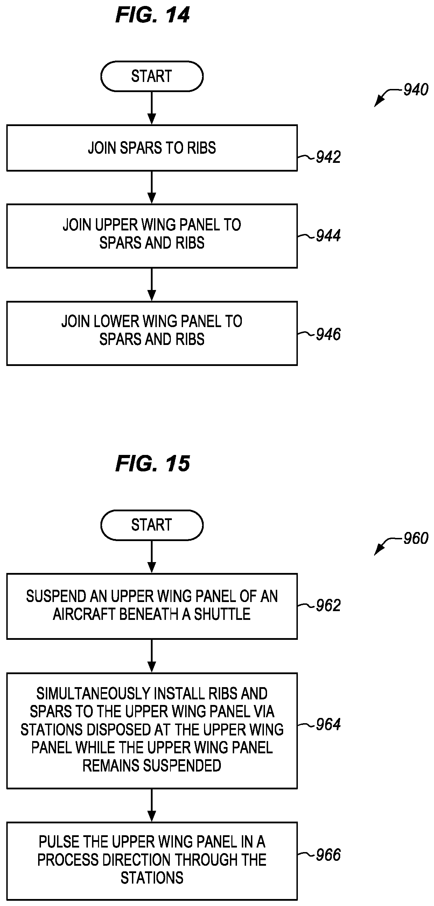

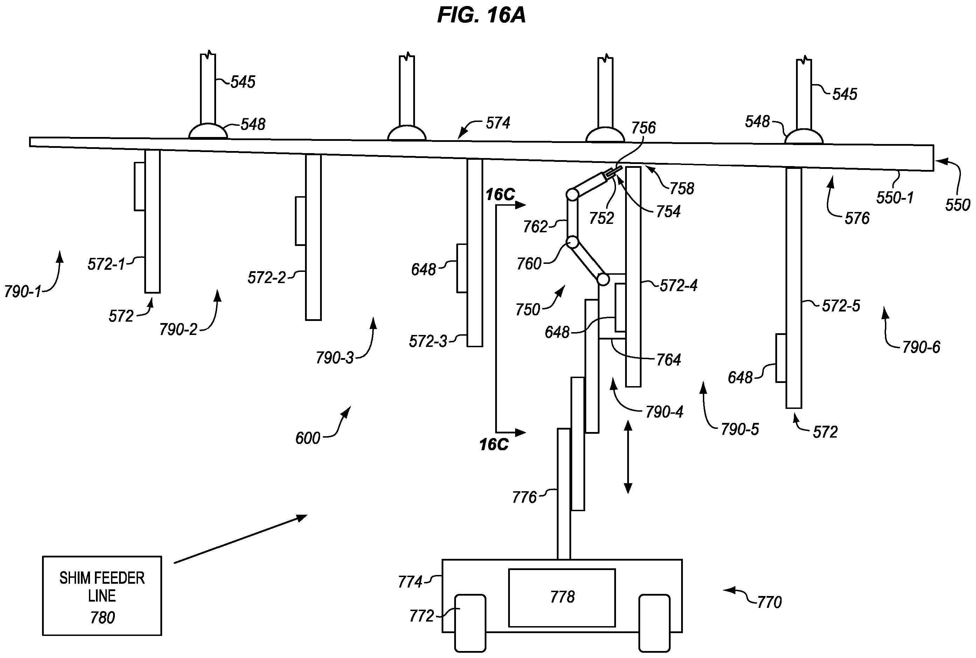

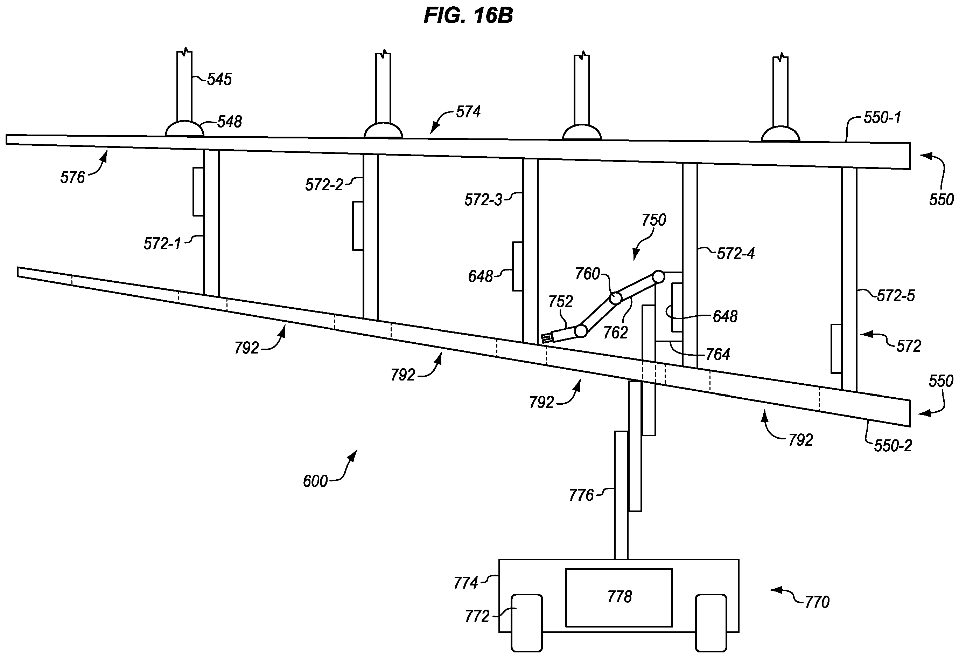

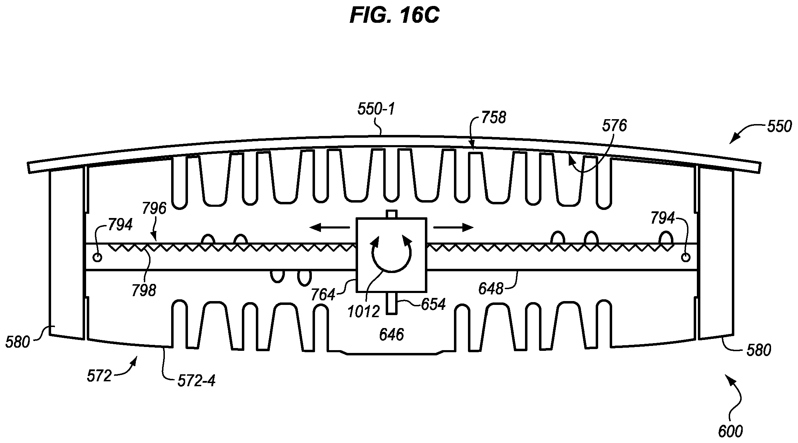

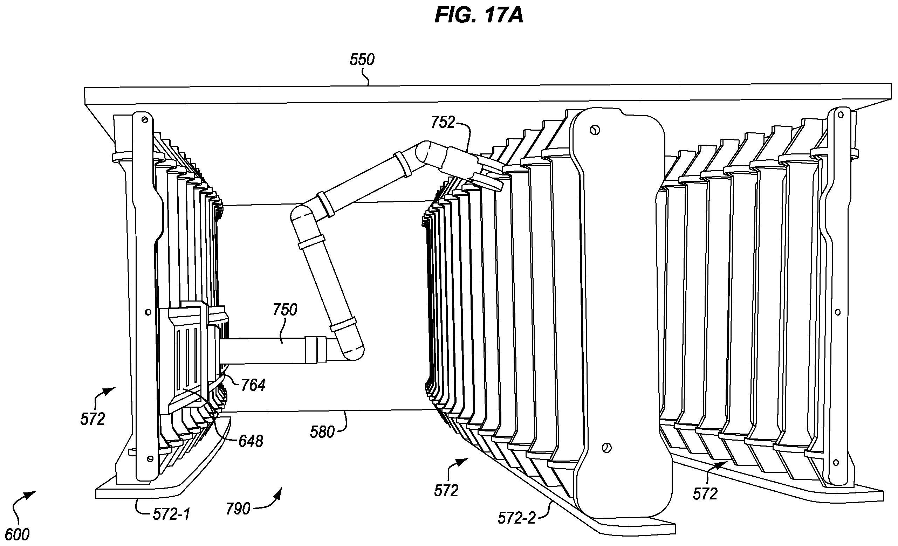

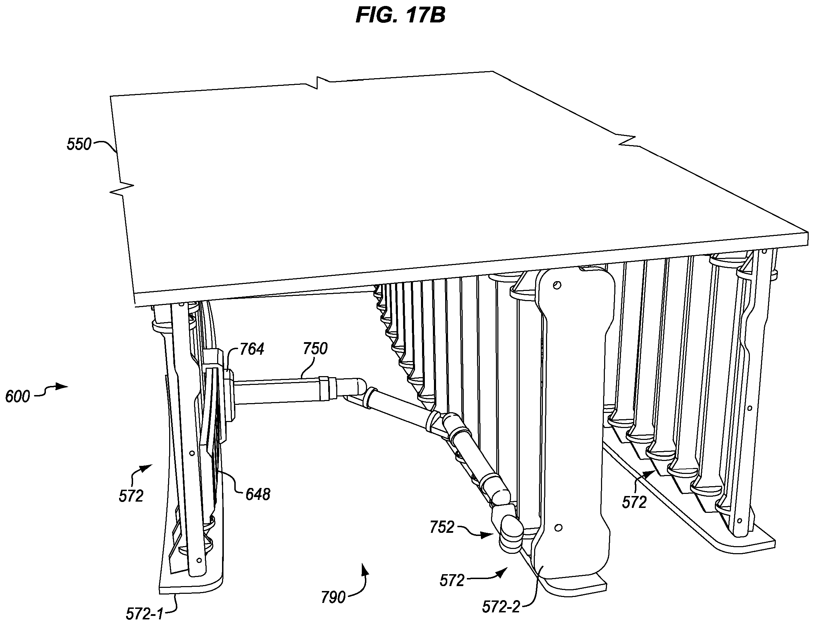

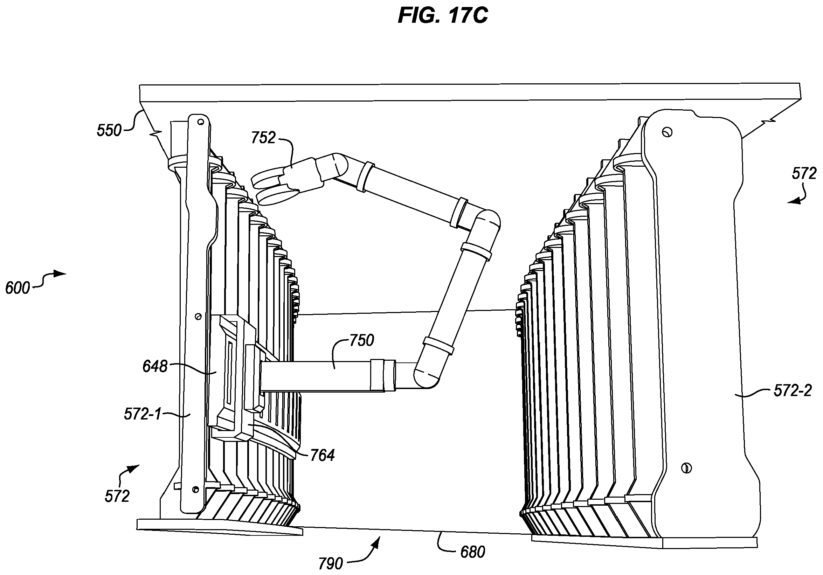

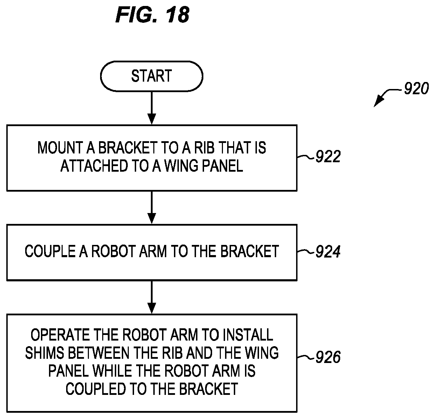

In some embodiments, indexing features of the wing panel 550, such as located in the manufacturing excess, may be used to index the wing panel 550 with the strongback 540 that supports it. In the view in FIG. 5B, strongback 540 is shown to include an indexing unit 542, which is configured to interface with corresponding indexing features installed in a manufacturing excess 554 of the wing panel 550 (which may correspond to manufacturing excess 204 of a preform 200 that was hardened into wing panel 550, per the fabrication process described above). In the illustrated embodiment, the indexing unit 542 physically couples with an indexing feature, in that the indexing unit 542 is shown to include a head 549 that is received within indexing features 210-1, which is shown as a through-hole. Although only one indexing unit 542 is shown in FIG. 5B, each strongback 540 may include any suitable number of indexing units, each of which may be configured to couple with an indexing feature 210 of the wing panel 550, such as to initially align, and/or maintain alignment of, the strongback with the wing panel. Like the indexing features 210, the indexing units 542 may take any suitable configuration, and may include coupling means other than to enable a mechanical coupling, such as magnets, and so forth. The indexing units may be configured to couple with a variety of different indexing features 210, or indexing features that may vary in location from one wing panel 550 to another, for example to enable the strongback 540 to couple with different wing panels, as needed.

Each work station 520 in the assembly line 500 is designed to physically couple, to image, and/or to otherwise interact with an indexing feature 210 in the wing panel 550, or with a strongback 540 that is itself physically coupled with an indexing feature 210. The indexing features 210 are placed at desired locations along the wing panel 550. In some embodiments, the indexing features are aligned along the wing panel 550. In some embodiments, the indexing features are not aligned. In some embodiments, the indexing features are equally spaced, and in some embodiments, the indexing features are not equally spaced. In some embodiments, the number of indexing features is equal to the number of work stations in the assembly line. In some embodiments, there can be more or fewer indexing features 210 than work stations at the assembly line. The indexing features 210 are disposed in a manufacturing excess 554 of the wing panel 550, which is trimmed away prior to a wing being assembled into an airframe for a fuselage.

In this embodiment, each of the work stations 520 in the assembly line 500 inserts into, grasps, fits, or aligns to an indexing feature 210. In addition to (or instead of) a physical (e.g. mechanical) coupling, indexing in some embodiments may be facilitated or accompanied by reading an RFID chip and/or other readable identifying means 126 (e.g., a bar code, etc.) on the wing panel. An illustrative example of a physical coupling is shown in FIG. 5B, which shows a section of the wing panel 550 within NDI station 524. Among the various structural components of NDI station 524 is an upper NDI unit 602, which includes an upper frame 614. Upper frame 614 is shown to include an indexing unit 622. In a manner similar to that described above with indexing unit 542 of strongback 540, indexing unit 622 of the NDI station 524 physically couples with an indexing feature of the wing panel 550, specifically by means of a head 624 that is received in indexing feature 210-2 located in a manufacturing excess 554, with indexing feature 210-2 shown as a through-hole. Again, although only one indexing unit 622 is shown in FIG. 5B, each work station 520 may include any suitable number of indexing units 622, each of which may be configured to couple with an indexing feature of the wing panel 550, such as to initially align, and/or maintain alignment of, the wing panel with the work station. Like the indexing features, the indexing units 622 may take any suitable configuration, and may include coupling means other than to enable a mechanical coupling, such as magnets, and so forth. The indexing units may be configured to couple with a variety of different indexing features, or indexing features that may vary in location from one wing panel to another, for example to enable the work station(s) to couple with different wing panels, as needed.

In the illustrated embodiment, indexing feature 210-1 of the wing panel 550 is shown to be coupled to an indexing unit 542 of the strongback 540, whereas indexing feature 210-2 is shown to be coupled to an indexing unit 622 of the NDI station 524. This is intended to illustrate example indexing configurations for the sake of explanation, rather than to indicate that indexing a wing panel by means of a physical coupling to both the strongback and the work station is required to all embodiments.

As noted above, NDI station 524 is shown in the illustrated embodiment to be physically indexed to the wing panel 550 by means of indexing unit 622 of the NDI station, the head 624 of which is received within indexing feature 210-2 of the wing panel 550.

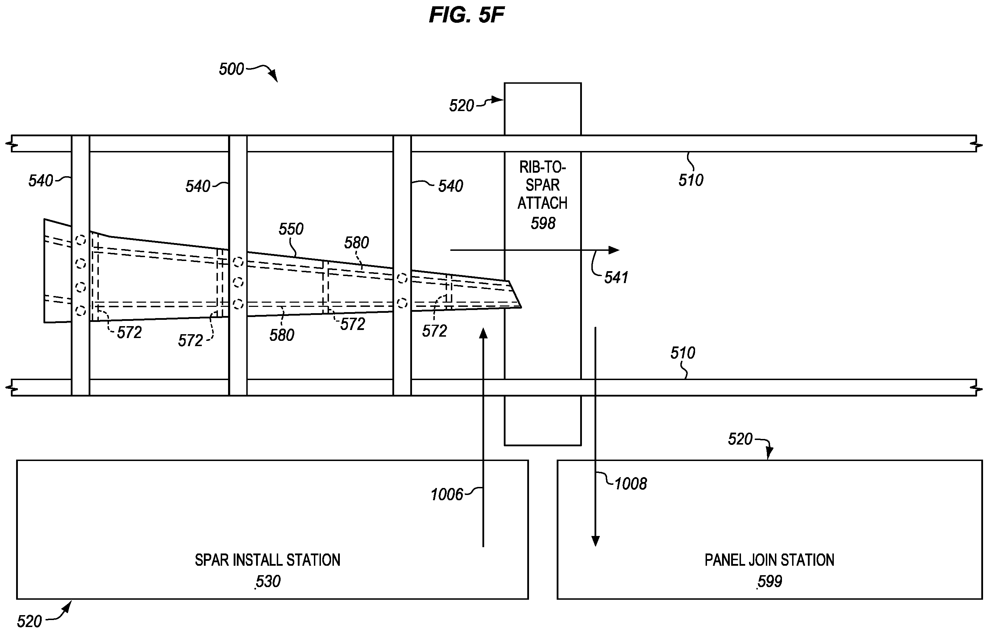

FIG. 5F illustrates an embodiment wherein, after work is complete at spar install station 530, wing panel 550 has been moved in direction 1006 back to track 510, and is ready to be advanced (in

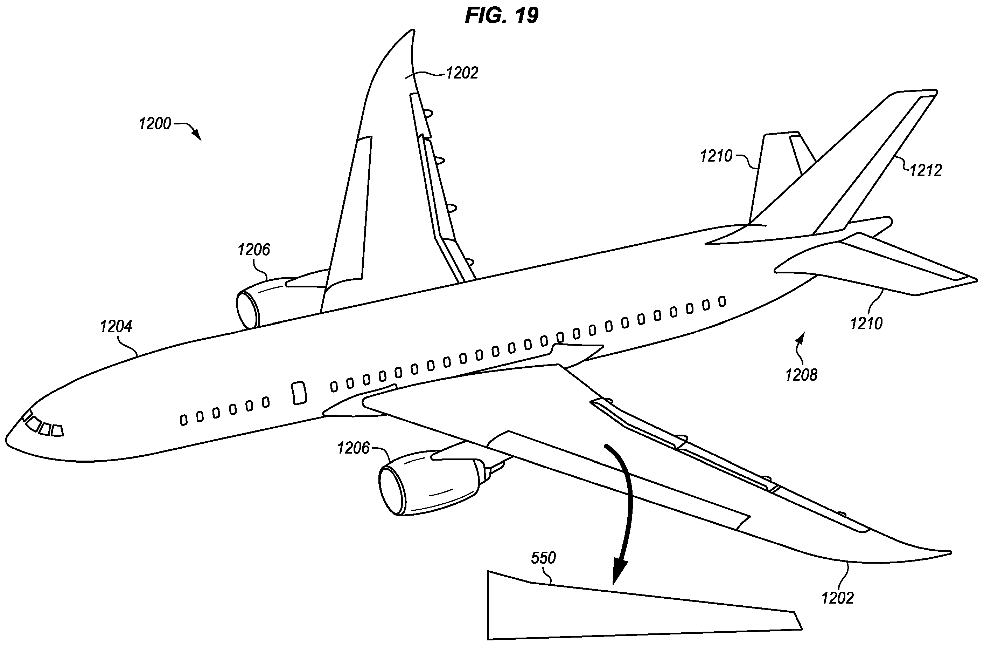

Turning now to FIG. 19, an illustration of a representative aircraft 1200 is depicted in which an illustrative embodiment of a wing panel and/or a wing assembly produced in accordance with aspects of the present disclosure may be implemented. In other words, aircraft 1200 is an example of an aircraft which can be formed using composite parts, wing panels, and/or wing assemblies produced according to one or more aspects of the illustrative fabrication methods shown in FIG. 1 and FIGS. 2A and 2B. In this illustrative example, aircraft 1200 has wings 1202 attached to and extending to either side of a fuselage 1204. Aircraft 1200 includes an engine 1206 attached to each wing 1202. Disposed at the rear end of fuselage 1204 is tail section 1208, which includes an opposed pair of horizontal stabilizers 1210 and a vertical stabilizer 1212. Wings 1202 are formed of an upper wing panel 550 and a lower wing panel (not shown) joined together, with an assembly of ribs and spars (not shown) at least partially forming the interior structure thereof.

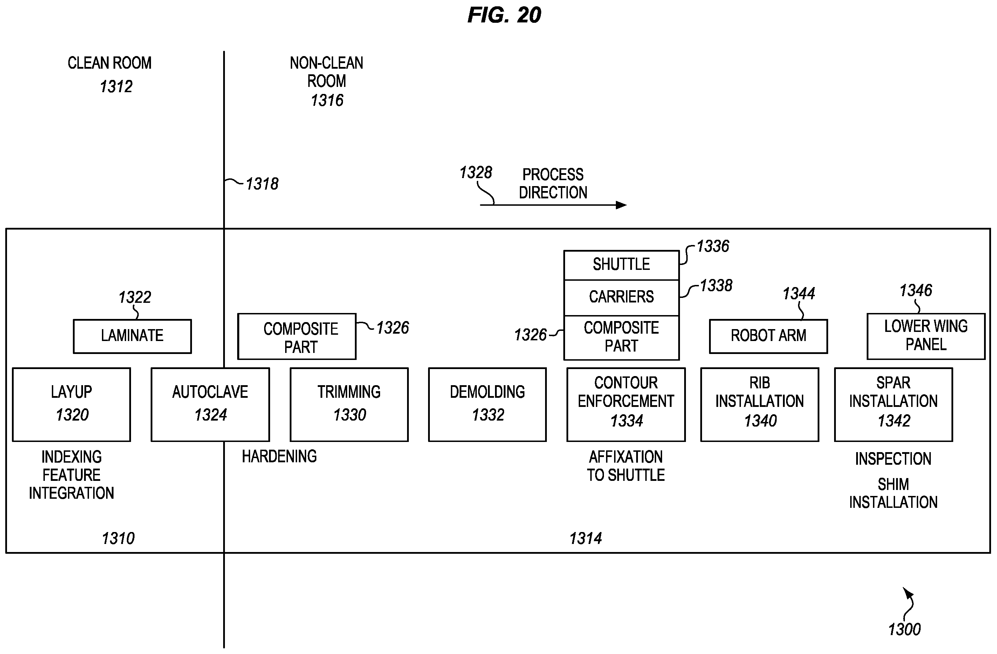

FIG. 20 is a block diagram of various components and systems (or stages) discussed herein in an illustrative embodiment. Specifically, FIG. 20 depicts a factory 1300 that includes a first assembly line 1310 in a clean room environment indicated at 1312, and a second assembly line 1314 in a non-clean room environment 1316. A boundary (e.g., one or more walls or enclosures), represented at 1318, separate the clean room 1312 and non-clean room 1316 environments. At layup 1320, indexing features (such as indexing features 122) are integrated into a laminate 1322 (such as preform 200) for a wing panel. The laminate 1322 is hardened at an autoclave 1324 into a composite part 1326. In accordance with the embodiments herein, the composite part 1326 is a wing panel (e.g., wing panel 550), and more specifically an upper wing panel, but factory 1300 may be configured to fabricate, process, and otherwise do work upon composite parts that take the form of other aircraft components in addition to a wing panel. The composite part 1326 is then transitioned to the assembly line 1314, which in the illustrated embodiment is shown to progress the composite part 1326 in a process direction 1328 through various systems and stages specific to those appropriate for an upper wing panel. For example, at the assembly line 1314, a trimming stage 1330 removes excess material and/or installs additional indexing features into the composite part 1326. At demolding 1332, the composite part 1326 is demolded (e.g., removed from a layup mandrel), after which a contour is enforced onto the composite part 1326 via contour enforcement 1334, in which the composite part 1326 is affixed to a shuttle 1336 (such as one or more strongbacks 540) that includes carriers 1338 (e.g., adjustable-length pogos 545 that include vacuum couplers 548). The shuttle 1336, such as via the carriers 1338, enforce a contour onto the composite part 1326 as the composite part is advanced along the assembly line 1314. Ribs and spars are installed onto the composite part 1326 as it is progressed through rib installation 1340 and spar installation 1342. Inspection of the rib and spar assembly, and shim installation, is performed by a robot arm 1344, as needed. A lower wing panel 1346 is then attached to form a wing assembly (e.g., wing assembly 600).

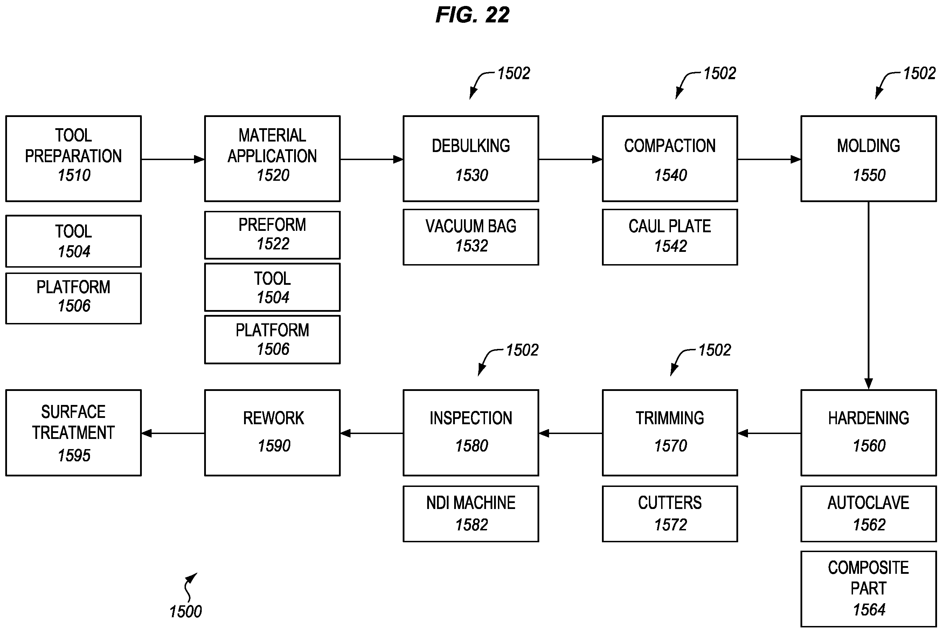

FIG. 22 depicts a view of an assembly line 1500 in an illustrative embodiment (e.g., of a continuous assembly line), in terms of a progression of work zones 1502 arranged along a moving line and configured to perform a variety of operations. The work zones include a work zone for tool preparation 1510 involving cleaning of, or application of coatings and/or potting compound to, or repairs to, a tool 1504 (e.g., layup mandrel 110), following which the tool 1504 is transported on a platform 1506 to additional work zones 1502. The additional work zones include a work zone for material application 1520 (e.g., where lamination operations are performed) in order to form a preform 1522 (such as preform 200). The preform 1522 may then be delivered via the assembly line 1500 to downstream work zones, including a work zone for debulking 1530 and, a work zone for compaction 1540, and a work zone for molding 1550. Debulking and/or compacting the preform 1522 may comprise vacuum compaction performed via a vacuum bag 1532. Molding the preform 1522 may be performed via precure forming, and/or via a combination of molding between the tool 1504 and a caul plate 1542.

The preform 1522 is further moved to work zone for hardening 1560 the preform 1522 into a composite part 1564 (e.g., composite part 250, which may be in the form of a wing panel 550), such as at an autoclave 1562, a work zone for trimming 1570 (e.g., via cutters 1572) the composite part 1564, a work zone for inspection 1580 (e.g., via an NDI machine 1582) of the composite part 1564, a work zone for rework 1590, and/or a work zone for surface treatment 1595.

In one embodiment, the trimming process may involve mass trimming of the preform 1522 before it is hardened, followed by more specific trimming after the composite part 1564 has been formed. Inspection of the composite part 1564 may include visual inspection as well as inspection using NDI (nondestructive inspection) equipment. Although reworking the composite part 1564 along the assembly line 500 is possible, in many cases the composite part 1564 may not require rework. The composite part 1564 then proceeds in process direction 541 through assembly line 500.

### Examples

In the following examples, additional processes, systems, and methods are described in the context of a fabrication and assembly system for wings for aircraft.

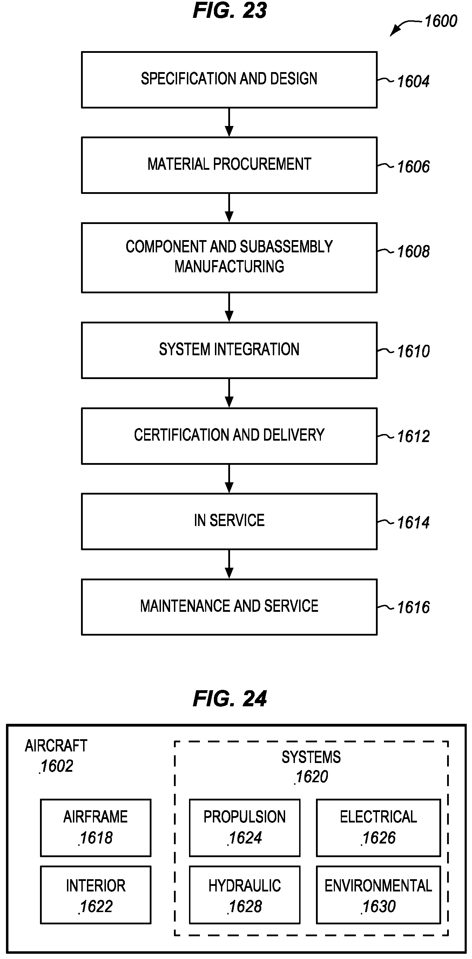

Referring more particularly to the drawings, embodiments of the disclosure may be described in the context of aircraft manufacturing and service in method 1600 as shown in FIG. 23 and an aircraft 1602 as shown in FIG. 24. During pre-production, method 1600 may include specification and design 1604 of the aircraft 1602 and material procurement 1606. During production, component and subassembly manufacturing 1608 and system integration 1610 of the aircraft 1602 takes place. Thereafter, the aircraft 1602 may go through certification and delivery 1612 in order to be placed in service 1614. While in service by a customer, the aircraft 1602 is scheduled for routine work in maintenance and service 1616 (which may also include modification, reconfiguration, refurbishment, and so on). Apparatus and methods embodied herein may be employed during any one or more suitable stages of the production and service described in method 1600 (e.g., specification and design 1604, material procurement 1606, component and subassembly manufacturing 1608, system integration 1610, certification and delivery 1612, service 1614, maintenance and service 1616) and/or any suitable component of aircraft 1602 (e.g., airframe 1618, systems 1620, interior 1622, propulsion system 1624, electrical system 1626, hydraulic system 1628, environmental 1630).

Each of the processes of method 1600 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 24, the aircraft 1602 produced by method 1600 may include an airframe 1618 with a plurality of systems 1620 and an interior 1622. Examples of systems 1620 include one or more of a propulsion system 1624, an electrical system 1626, a hydraulic system 1628, and an environmental system 1630. Any number of other systems may be included. Although an aerospace example is shown, the principles of the invention may be applied to other industries, such as the automotive industry.

As already mentioned above, apparatus and methods embodied herein may be employed during any one or more of the stages of the production and service described in method 1600. For example, components or subassemblies corresponding to component and subassembly manufacturing 1608 may be fabricated or manufactured in a manner similar to components or subassemblies produced while the aircraft 1602 is in service. Also, one or more apparatus embodiments, method embodiments, or a combination thereof may be utilized during the subassembly manufacturing 1608 and system integration 1610, for example, by substantially expediting assembly of or reducing the cost of an aircraft 1602. Similarly, one or more of apparatus embodiments, method embodiments, or a combination thereof may be utilized while the aircraft 1602 is in service, for example and without limitation during the maintenance and service 1616. Thus, the invention may be used in any stages discussed herein, or any combination thereof, such as specification and design 1604, material procurement 1606, component and subassembly manufacturing 1608, system integration 1610, certification and delivery 1612, service 1614, maintenance and service 1616) and/or any suitable component of aircraft 1602 (e.g., airframe 1618, systems 1620, interior 1622, propulsion system 1624, electrical system 1626, hydraulic system 1628, and/or environmental 1630.

In one embodiment, a part comprises a portion of airframe 1618, and is manufactured during component and subassembly manufacturing 1608. The part may then be assembled into an aircraft in system integration 1610, and then be utilized in service 1614 until wear renders the part unusable. Then, in maintenance and service 1616, the part may be discarded and replaced with a newly manufactured part. Inventive components and methods may be utilized throughout component and subassembly manufacturing 1608 in order to manufacture new parts.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

Although specific embodiments are described herein, the scope of the disclosure is not limited to those specific embodiments. The scope of the disclosure is defined by the following claims.

## Claims

1. A method (300) for installing indexing features into a composite part, the method comprising:
- laying up (302) a preform (200) onto a tool (110) defining a contour (112) for a composite part (250), as well as onto a portion of the tool that is located beyond final trim boundaries (202) of the composite part;
- hardening (306) the preform into the composite part with indexing features (210) formed therein; and
- demolding (310) the composite part from the tool while retaining a manufacturing excess (204) that includes the indexing features.
and the method further comprising:
- prior to demolding (310) the part, removing (308) material from the composite part (250) while retaining the manufacturing excess (204) that includes the indexing features (210), wherein the material is a flash edge (256) of surplus material that extends beyond a manufacturing excess region (122) and defines a manufacturing excess edge (206).

2. The method of claim 1, further comprising prior to hardening (306) the preform (200), conforming (304) the preform to surface features (114) on the tool (110) that are located beyond the final trim boundaries (202) of the composite part (250) and that complementarily form the indexing features (210) into the preform; and preferably wherein the indexing features (210) are disposed at the surface features (114) on the tool (110); and/or
wherein the method further comprises forming additional indexing features (210) into the composite part (250).

3. The method according to any one of claims 1 or 2, wherein the indexing features are readable identifying means, and preferably wherein the readable identifying means are selected from the group consisting of an RFID chip and a bar code.

4. The method according to any one of claims 1 to 3, further comprising:
- indexing the composite part (250) to a work station (520) in an assembly line via (500) one or more of the indexing features (210); and
- performing work on the composite part at the work station while the composite part is indexed to the work station.

5. The method according to any one of claims 1 to 4, wherein the tool (110) includes recesses in the contour (112), and wherein the method further comprises filling the recesses with potting compound.

6. The method according to any one of claims 1 to 5, further comprising:
- indexing the composite part (250) to a shuttle (540) configured to advance the composite part through an assembly line (500) via one or more of the indexing features (210); and
- advancing the composite part while the composite part is indexed to the shuttle.

7. A system for installing indexing features into a composite part, the system comprising:
- a tool (110) comprising:
- a layup region (120) for laying up a preform (200) for a composite part (250) having a final perimeter (202);
- a manufacturing excess region (122) disposed beyond the final perimeter and at least partially encompassing the layup region; and
- surface features (114) disposed within the manufacturing excess region configured to complementarily form indexing features (210) onto a preform laid-up onto the tool;
- a guide (116) defining a path around the manufacturing excess region (122),; and
- a cutter (130) configured to trim excess material beyond the manufacturing excess region (122) from a composite part formed from the preform, wherein the cutter (130) is configured to follow the guide (116) when trimming excess material;
wherein the guide (116) is configured to direct the cutter (130) to remove material from the composite part (250) hardened from the preform (200), wherein the material is a flash edge (256) of surplus material that extends beyond the manufacturing excess region (122), and wherein the tool is configured to enable a cutting operation to remove the flash edge prior to demolding of the composite part (250) from the tool (110).

8. The system of claim 7, wherein:
the tool (110) further comprises a potted area (118) within the layup region (120), wherein the potted area is configured to accommodate overshoot from machining a composite part (250) hardened from the preform (200).

9. The system according to any one of claims 7 to 8, wherein:
the surface features (114) in the tool (110) are each separated from each other by a predefined distance.

10. The system according to any one of the claims 7 to 9, wherein the indexing features (210) are readable identifying means (126), and preferably wherein readable identifying means (126) are selected from the group consisting of an RFID chip and a bar code.

11. A system according to any one of the claims 7 to 10, wherein the cutter (130) has a blade (132) and an actuator (134) configured to drive the blade (132) to cut portions of the composite part that are proximate to the guides (116), wherein the guides (116) are adjoining grooves that encompass the manufacturing excess region (122), in the tool (110).

12. The system of any one of the claims 7 to 11, further comprising a controller (140) configured to control an operation of the cutter (130).

13. Preform for use in a system according to one of the claims 7 or 12 for forming a composite wing panel having a final perimeter, the preform comprising:
- a portion disposed within the final perimeter (202), said portion having a contour (112) formed thereto;
- a manufacturing excess (204) disposed beyond the final perimeter; and
- at least one indexing feature (210) formed into the manufacturing excess, wherein the at least one indexing feature (210) is configured to be utilized for indexing after the preform 200 has hardened into a composite part (250);
wherein the manufacturing excess (204) comprises a flash edge (256) of surplus material that is configured to extend beyond the manufacturing excess region (122).

14. Method for fabricating a portion of an aircraft using the system according to one of the claims 11 to 12.

15. A non-transitory computer readable medium embodying programmed instructions which, when executed by a processor, are operable for performing a method (300) according to any one of the claims 1 to 6.

## Patentansprüche

1. Verfahren (300) zum Installieren von Indexierungsmerkmalen in einem Verbundteil, das Verfahren umfassend:
- Auflegen (302) einer Vorform (200) auf ein Werkzeug (110), das eine Kontur (112) für ein Verbundteil (250) definiert, sowie auf einen Abschnitt des Werkzeugs, der sich außerhalb der endgültigen Stutzgrenzen (202) des Verbundteils befindet;
- Aushärten (306) der Vorform zu dem Verbundteil mit darin ausgebildeten Indexierungsmerkmalen (210); und
- Entformen (310) des Verbundteils aus dem Werkzeug während ein Fertigungsüberschuss (204) erhalten bleibt, der die Indexierungsmerkmale einschließt.
und das Verfahren ferner umfassend:
- vor dem Entformen (310) des Teils, Entfernen (308) von Material von dem Verbundteil (250), während der Fertigungsüberschuss (204) erhalten bleibt, der die Indexierungsmerkmale (210) einschließt, wobei das Material eine Abquetschkante (256) aus überschüssigem Material ist, die sich außerhalb eines Fertigungsüberschussbereichs (122) erstreckt und eine Fertigungsüberschusskante (206) definiert.

2. Verfahren nach Anspruch 1, ferner umfassend vor dem Aushärten (306) der Vorform (200) ein Anpassen (304) der Vorform an Oberflächenmerkmale (114) auf dem Werkzeug (110), die sich außerhalb der endgültigen Stutzgrenzen (202) des Verbundteils (250) befinden und die Indexierungsmerkmale (210) komplementär in die Vorform ausbilden; und wobei die Indexierungsmerkmale (210) vorzugsweise an den Oberflächenmerkmalen (114) auf dem Werkzeug (110) angeordnet sind; und/oder
wobei das Verfahren ferner das Ausbilden zusätzlicher Indexierungsmerkmale (210) in das Verbundteil (250) umfasst.

3. Verfahren nach einem der Ansprüche 1 oder 2, wobei die Indexierungsmerkmale lesbare Identifizierungsmittel sind und wobei die lesbaren Identifizierungsmittel vorzugsweise aus der Gruppe ausgewählt sind, bestehend aus einem RFID-Chip und einem Strichcode.

4. Verfahren nach einem der Ansprüche 1 bis 3, ferner umfassend:
- Indexieren des Verbundteils (250) an eine Arbeitsstation (520) in einer Montagestraße über (500) eines oder mehrere der Indexierungsmerkmale (210); und
- Durchführen von Arbeit an dem Verbundteil an der Arbeitsstation, während das Verbundteil an die Arbeitsstation indexiert wird.

5. Verfahren nach einem der Ansprüche 1 bis 4, wobei das Werkzeug (110) Aussparungen in der Kontur (112) einschließt und wobei das Verfahren ferner ein Füllen der Aussparungen mit Vergussmasse umfasst.

6. Verfahren nach einem der Ansprüche 1 bis 5, ferner umfassend:
- Indexieren des Verbundteils (250) an einen Shuttle (540), der konfiguriert ist, um das Verbundteil über eines oder mehrere der Indexierungsmerkmale (210) durch eine Montagestraße (500) zu befördern; und
- Befördern des Verbundteils, während das Verbundteil an den Shuttle indexiert wird.

7. System zum Installieren von Indexierungsmerkmalen in einem Verbundteil, das System umfassend:
- Werkzeuganordnung (110), umfassend:
- einen Auflegebereich (120) zum Auflegen einer Vorform (200) für ein Verbundteil (250), die einen endgültigen Umfang (202) aufweist;
- einen Fertigungsüberschussbereich (122), der außerhalb des endgültigen Umfangs angeordnet ist und den Auflegebereich mindestens teilweise umgibt; und
- Oberflächenmerkmale (114), die innerhalb des Fertigungsüberschussbereichs angeordnet sind, die konfiguriert sind, um komplementäre Indexierungsmerkmale (210) auf einer Vorform auszubilden, die auf das Werkzeug aufgelegt ist;
- eine Führung (116), die einen Weg um den Fertigungsüberschussbereich (122) herum definiert; und
- eine Schneidevorrichtung (130), die konfiguriert ist, um überschüssiges Material außerhalb des Fertigungsüberschussbereichs (122) von einem Verbundteil zu stutzen, das aus der Vorform ausgebildet ist, wobei die Schneidevorrichtung (130) konfiguriert ist, um der Führung (116) zu folgen, wenn überschüssiges Material gestutzt wird;
wobei die Führung (116) konfiguriert ist, um die Schneidevorrichtung (130) anzuleiten, um Material von dem Verbundteil (250) zu entfernen, das aus der Vorform (200) ausgehärtet wird, wobei das Material eine Abquetschkante (256) aus überschüssigem Material ist, die sich außerhalb des Fertigungsüberschussbereich (122) erstreckt, und wobei das Werkzeug konfiguriert ist, um einen Schneidvorgang zu ermöglichen, um die Abquetschkante vor dem Entformen des Verbundteils (250) aus dem Werkzeug (110) zu entfernen.

8. System nach Anspruch 7, wobei:
das Werkzeug (110) ferner einen vergossenen Bereich (118) innerhalb des Auflegebereichs (120) aufweist, wobei der vergossene Bereich konfiguriert ist, um ein Überschwingen aus einer Bearbeitung eines Verbundteils (250) aufzunehmen, das aus der Vorform (200) ausgehärtet wird.

9. System nach einem der Ansprüche 7 bis 8, wobei:
die Oberflächenmerkmale (114) in dem Werkzeug (110) jeweils durch einen vordefinierten Abstand voneinander getrennt sind.

10. System nach einem der Ansprüche 7 bis 9, wobei die Indexierungsmerkmale (210) lesbare Identifizierungsmittel (126) sind und wobei die lesbaren Identifizierungsmittel (126) vorzugsweise aus der Gruppe ausgewählt sind, die aus einem RFID-Chip und einem Strichcode besteht.

11. System nach einem der Ansprüche 7 bis 10, wobei die Schneidevorrichtung (130) eine Klinge (132) und einen Aktuator (134) aufweist, der konfiguriert ist, um die Klinge (132) anzutreiben, um Abschnitte des Verbundteils zu schneiden, die in der Nähe der Führungen (116) liegen, wobei die Führungen (116) an Nuten angrenzen, die den Fertigungsüberschussbereich (122) in dem Werkzeug (110) umgeben.

12. System nach einem der Ansprüche 7 bis **11,** ferner umfassend eine Steuerung (140), die konfiguriert ist, um einen Betrieb der Schneidevorrichtung (130) zu steuern.

13. Vorform zur Verwendung in einem System nach einem der Ansprüche 7 oder 12 zum Ausbilden einer Verbundflügelplatte, die einen endgültigen Umfang aufweist, die Vorform umfassend:
- einen Abschnitt, der innerhalb des endgültigen Umfangs (202) angeordnet ist, wobei der Abschnitt eine Kontur (112) aufweist, die daran ausgebildet ist;
- einen Fertigungsüberschuss (204), der außerhalb des endgültigen Umfangs angeordnet ist; und
- mindestens ein Indexierungsmerkmal (210), das in den Fertigungsüberschuss ausgebildet ist, wobei das mindestens eine Indexierungsmerkmal (210) konfiguriert ist, um zum Indexieren verwendet zu werden, nachdem die Vorform 200 sich zu einem Verbundteil (250) ausgehärtet hat;
wobei der Fertigungsüberschuss (204) eine Abquetschkante (256) aus überschüssigem Material umfasst, die konfiguriert ist, um sich außerhalb des Fertigungsüberschussbereichs (122) zu erstrecken.

14. Verfahren zum Herstellen eines Abschnitts eines Luftfahrzeugs unter Verwendung des Systems nach einem der Ansprüche **11** bis 12.

15. Nichtflüchtiges computerlesbares Medium, das programmierte Anweisungen enthält, die, wenn sie durch einen Prozessor ausgeführt werden, zum Durchführen eines Verfahrens (300) nach einem der Ansprüche 1 bis 6 betriebsfähig sind.

## Revendications

1. Procédé (300) d'installation d'éléments d'indexation dans une pièce composite, le procédé comprenant :
- la pose (302) d'une préforme (200) sur un outil (110) définissant un contour (112) pour une pièce composite (250), ainsi que sur une partie de l'outil qui est située au-delà des limites de découpe finales (202) de la pièce composite ;
- le durcissement (306) de la préforme dans la pièce composite avec des éléments d'indexation (210) formés à l'intérieur ; et
- le démoulage (310) de la pièce composite de l'outil tout en conservant un excédent de fabrication (204) qui comporte les éléments d'indexation.
et le procédé comprenant en outre :
- avant le démoulage (310) de la pièce, le retrait (308) de matière de la pièce composite (250) tout en conservant l'excédent de fabrication (204) qui comporte les éléments d'indexation (210), dans lequel la matière est un bord à bavure(256) de matière excédentaire qui s'étend au-delà d'une région d'excédent de fabrication (122) et définit un bord d'excédent de fabrication (206).

2. Procédé selon la revendication 1, comprenant en outre, avant le durcissement (306) de la préforme (200), la conformation (304) de la préforme aux éléments de surface (114) sur l'outil (110) qui sont situés au-delà des limites de découpe finales (202) de la pièce composite (250) et qui forment de manière complémentaire les éléments d'indexation (210) dans la préforme ; et de préférence dans lequel les éléments d'indexation (210) sont disposés au niveau des éléments de surface (114) sur l'outil (110) ; et/ou
dans lequel le procédé comprend en outre la formation d'éléments d'indexation (210) supplémentaires dans la pièce composite (250).

3. Procédé selon l'une quelconque des revendications 1 ou 2, dans lequel les éléments d'indexation sont des moyens d'identification lisibles, et de préférence dans lequel les moyens d'identification lisibles sont choisis dans le groupe constitué d'une puce RFID et d'un code à barres.

4. Procédé selon l'une quelconque des revendications 1 à 3, comprenant en outre :
- l'indexation de la pièce composite (250) à un poste de travail (520) dans une chaîne d'assemblage (500) par l'intermédiaire d'un ou de plusieurs des éléments d'indexation (210) ; et
- la réalisation de travaux sur la pièce composite au poste de travail pendant que la pièce composite est indexée au poste de travail.

5. Procédé selon l'une quelconque des revendications 1 à 4, dans lequel l'outil (110) comporte des évidements dans le contour (112), et dans lequel le procédé comprend en outre le remplissage des évidements avec un produit d'enrobage.

6. Procédé selon l'une quelconque des revendications 1 à 5, comprenant en outre :
- l'indexation de la pièce composite (250) à une navette (540) configurée pour faire avancer la pièce composite à travers une ligne d'assemblage (500) par l'intermédiaire d'un ou de plusieurs des éléments d'indexation (210) ; et
- l'avancement de la pièce composite pendant que la pièce composite est indexée à la navette.

7. Système d'installation d'éléments d'indexation dans une pièce composite, le système comprenant :
- un outil (110), comprenant :
- une région de pose (120) pour la pose d'une préforme (200) pour une pièce composite (250) présentant un périmètre final (202) ;
- une région d'excédent de fabrication (122) disposée au-delà du périmètre final et englobant au moins partiellement la région de pose ; et
- des éléments de surface (114) disposés dans la région d'excédent de fabrication conçues pour former de manière complémentaire des éléments d'indexation (210) sur une préforme posée sur l'outil ;
- un guide (116) définissant une trajectoire autour de la région d'excédent de fabrication (122) ; et
- un dispositif de coupe (130) configuré pour découper un excédent de matière au-delà de la région d'excédent de fabrication (122) d'une pièce composite formée à partir de la préforme, dans lequel le dispositif de coupe (130) est configuré pour suivre le guide (116) lors du découpage de l'excédent de matière ;
dans lequel le guide (116) est configuré pour diriger le dispositif de coupe (130) afin d'enlever de la matière de la pièce composite (250) durcie à partir de la préforme (200), dans lequel la matière est un bord à bavure (256) de matière excédentaire qui s'étend au-delà de la région d'excédent de fabrication (122), et dans lequel l'outil est conçu pour permettre une opération de coupe afin d'enlever le bord à bavure avant le démoulage de la pièce composite (250) de l'outil (110).

8. Système selon la revendication 7, dans lequel :
l'outil (110) comprend en outre une zone enrobée (118) dans la région de pose (120), dans lequel la zone enrobée est conçue pour absorber des dépassements dus à l'usinage d'une pièce composite (250) durcie à partir de la préforme (200).

9. Système selon l'une quelconque des revendications 7 à 8, dans lequel :
les éléments de surface (114) de l'outil (110) sont chacun séparés les uns des autres à une distance prédéfinie.

10. Système selon l'une quelconque des revendications 7 à 9, dans lequel les éléments d'indexation (210) sont des moyens d'identification lisibles (126), et de préférence dans lequel des moyens d'identification lisibles (126) sont choisis dans le groupe constitué d'une puce RFID et d'un code à barres.

11. Système selon l'une quelconque des revendications 7 à 10, dans lequel le dispositif de coupe (130) possède une lame (132) et un actionneur (134) configuré pour entraîner la lame (132) afin de couper des parties de la pièce composite qui sont proches des guides (116), dans lequel les guides (116) sont des rainures adjacentes qui englobent la région d'excédent de fabrication (122), dans l'outil (110).

12. Système selon l'une quelconque des revendications 7 à 11, comprenant en outre une unité de commande (140) configurée pour commander un fonctionnement du dispositif de coupe (130).

13. Préforme destinée à être utilisée dans un système selon l'une quelconque des revendications 7 ou 12 pour former un panneau d'aile composite présentant un périmètre final, la préforme comprenant :
- une partie disposée à l'intérieur du périmètre final (202), ladite partie présentant un contour (112) formé sur celle-ci ;
- un excédent de fabrication (204) disposé au-delà du périmètre final ; et
- au moins un élément d'indexation (210) formé dans l'excédent de fabrication, dans laquelle l'au moins un élément d'indexation (210) est conçu pour être utilisé pour l'indexation après que la préforme (200) a durci en une pièce composite (250) ;
dans laquelle l'excédent de fabrication (204) comprend un bord à bavure (256) de matière excédentaire conçu pour s'étendre au-delà de la région d'excédent de fabrication (122).

14. Procédé de fabrication d'une partie d'un aéronef à l'aide du système selon l'une quelconque des revendications 11 à 12.

15. Support non-transitoire lisible par ordinateur contenant des instructions programmées qui, lorsqu'elles sont exécutées par un processeur, permettent d'effectuer un procédé (300) selon l'une quelconque des revendications 1 à 6.
